# EUROPEAN PATENT SPECIFICATION

(11) **EP 1 703 746 B1**
(45) Date of publication and mention of the grant of the patent: **03.10.2012**
(21) Application number: 05700396.4
(22) Date of filing: 06.01.2005
(51) Int. Cl.: H04L 29/06

(54) **A METHOD FOR REDUCING INTERFACE LOAD OF HOME SUBSCRIBER SERVER**
VERFAHREN ZUR VERRINGERUNG DER SCHNITTSTELLENLAST EINES HEIM-TEILNEHMER-SERVERS
PROCEDE SERVANT A LIMITER LA CHARGE D'INTERFACE D'UN SERVEUR D'ABONNES LOCAL

(30) Priority: 07.01.2004 CN 200410002310; 10.02.2004 CN 200410004207
(43) Date of publication of application: 20.09.2006
(73) Proprietor: Huawei Technologies Co., Ltd., Shenzhen, Guangdong Province 518129 (CN)
(72) Inventor: WU, Yajuan, Huawei Administration Building, Shenzhen, Guangdong 518129 (CN); ZHANG, Wenlin, Huawei Administration Building, Shenzhen, Guangdong 518129 (CN)
(74) Representative: Körber, Martin Hans
(86) International application number: PCT/CN2005/000021
(87) International publication number: WO 2005/069645

(56) References cited:
- WO-A-03/075596
- KR-A- 2002 086 163
- KR-A- 2003 055 417
- "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-CN4, no. V560, December 2003 (2003-12), XP014017384 ISSN: 0000-0001
- YI-BING LIN ET AL: "An All-IP Approach for UMTS Third-Generation Mobile Networks" IEEE NETWORK, IEEE SERVICE CENTER, NEW YORK, NY, US, vol. 16, no. 5, September 2002 (2002-09), pages 8-19, XP011093514 ISSN: 0890-8044

## Description

### Field of the Technology

The present invention relates to mobile communications technology, particularly, to methods for reducing the load on the interface of Home Subscriber Server (HSS).

### Background of the Invention

With the development of broadband network, mobile communications has gone beyond the traditional voice communications. Combined with data services, such as Presence Service, Short Message Service, WEB browsing service, Location Service, PUSH service, and File-sharing service, Mobile communications of various media types, such as audio, video, image and text, can be implemented so as to satisfy various demands of users.

For example, Short Message Service can provide such services as instant messaging, chat room, and Multi-Media Short Message service; Video services are provided together with entertainment, Multi-Media Information, and Daily Communications; Electronic Commerce includes such services as product catalog, search engine, shopping cart, as well as order form management and payment; Game services include individual games and group games; Location services include such services as looking for a person, providing guidance, and transmitting alarm; Personal Assistant provides services such as address book, schedule, bookmark, file storing, event reminder, and E-mail.

Organizations like the 3rd Generation Partnership Project (3GPP) and the 3rd Generation Partnership Project 2 (3GPP2) have successively put forward the architecture based on IP Multimedia Subsystem (IMS), aimed at using a standardized open architecture in mobile networks for implementing various multimedia applications so that more choices and more plentiful perceptions could be enjoyed by users.

The IMS architecture superimposes on packet switched network, including functional entities such as the Call Session Control Function (CSCF), Media Gateway Control Function (MGCF), Media Resources Function (MRF), and HSS.

CSCF can be divided into 3 logical functions, serving CSCF (S-CSCF), proxy CSCF (P-CSCF), and interrogating CSCF (I-CSCF), which can be configured in different physical devices, or in different functional modules of one physical device. S-CSCF is the service control center of IMS, used to perform session control, maintain session states, manage subscriber information, and generate charging data; P-CSCF is the access point of end-users to access IMS, used in initiating subscriber registration, QoS (Quality of Service) control, and security management; I-CSCF is responsible for interworking between IMS domains, administering assignment of S-CSCF, hiding network topology and configuration information from the outside, and generating charging data.

MGCF is used in implementing the interworking between an IMS network and other kinds of networks. MRF is used in providing media resources, such as audio receiving/transmitting, coding/decoding, and multimedia conference bridge.

HSS is a very important subscriber database, storing the subscription information and configuration information of users, such as users' identifier, number and addressing information, security information, location information, and profile information. HSS is used in supporting the processing of calls and sessions of each network entity. There may exist one or more HSS in the home network, and the number of HSS depends on the number of mobile subscribers, capability of network devices, and specific structure of networking.

As the network architecture of IMS is independent to the bearer network, the IMS architecture defined by 3GPP can also be applied to other packet-switched networks other than the packet domain network defined by 3GPP. Therefore, application of IMS described here is not limited to networks and applications associated with 3GPP. Services and applications of other types of access network and bearer network can be implemented by the IMS architecture as well.

A User Equipment (UE) includes at least one Public User Identity, which is used in identifying the service requested by the UE. UE registers each Public User

Identity, respectively, i.e. the registration procedure of each Public User Identity is independent. As these public user identities belong to one user, however, it is defined in the specifications that, after UE has successfully registered a Public User Identity and is assigned an S-CSCF by the network, the network has to return the same S-CSCF to the UE when it makes registration with the UE's other public user identities. Registration has a life cycle, and the S-CSCF assigned for UE each time by the network is only responsible for processing the IMS session signaling related with the UE during the life cycle of the registration. Refer to 3GPP TS 23.228 for the specific implementation.

Each UE that has subscribed to IMS services is assigned one or more than one Private User Identity by the operator of the home network, which is used in the procedures of registration, authorization, management, and charging and is in the format of Network Access Identifier (NAI). The Private User Identity is usually not open to the outside while the public user identifier is open to the outside and used in sessions of various services.

Next is an example of the procedure based on IMS for the first registration of a Public User Identity, describing the specific interaction between HSS and network entities.

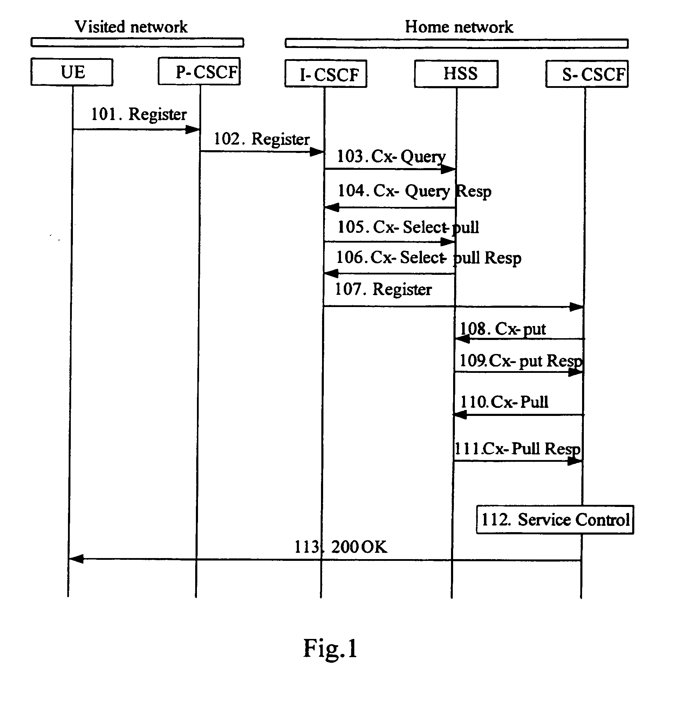

Figure 1 is the flowchart based on IMS for the first registration of a Public User Identity in the prior art. In this preferred embodiment, the Session Initiation Protocol (SIP) is used as the signaling control protocol of IP multimedia sessions; the interface Cx between HSS and I-CSCF/S-CSCF uses the Diameter protocol to transfer the related information. The function for hiding network topology is not needed in this preferred embodiment and UE is located in a visited network.

Step 101: After establishing the physical connection with the bearer, UE sends a Register message to the P-CSCF in the visited network severing the UE. The Register message includes: Public User Identity, Private User Identity, domain name of the home network, and the IP address of the UE requesting registration.

Step 102: On receiving the Register message ,the P-CSCF analyzes the domain-name information of home network in the Register message to obtain the address of the access point of the home network (i.e. the I-CSCF), and then forwards the Register message of the UE to the I-CSCF of the home network. The forwarded Register message includes: name or address of P-CSCF, Public User Identity, Private User Identity, identifier of the visited network where P-CSCF is located, and the IP address of the UE requesting registration.

Step 103: I-CSCF sends a Cx-Query message to HSS. The User-Authorization-Type in Cx-Query message is REGISTRATION, which indicates that Cx-Query message is a message requesting for a registration. The Cx-Query message includes such information as Public User Identity, Private User Identity, and identifier of the network where P-CSCF is located and so on.

Step 104: After receiving the Cx-Query message from I-CSCF, HSS first decides according to the subscription information of the user and the policy of the operator whether the UE is permitted to perform a registration in the current network, if not permitted, just returns to I-CSCF a Cx-Query Resp message indicating rejection to the registration. Then I-CSCF returns a message of registration failure to the UE via P-CSCF, and the procedure is over.

If the UE is permitted to perform a registration in the current network, HSS will return appropriate information to I-CSCF according to whether HSS has stored the name of S-CSCF that has served the UE and according to whether the contents of subscription document of the UE requesting a registration stored in HSS have been changed or updated.

If the UE requesting a registration has at least one Public User Identity that has been registered in HSS, i.e. HSS has stored the name of the S-CSCF that is serving the UE and the registration is valid, and the contents of subscription document of the UE requesting a registration stored in HSS have not been changed or updated, HSS will return to I-CSCF a Cx-Query Resp message including the name of the S-CSCF that is serving the UE before going to Step 107.

If the UE has at least one Public User Identity of which the registration status is unregistered or the registration has expired but the name of the S-CSCF used by the UE last time is still stored in HSS, or the UE has been assigned an S-CSCF by HSS as an unregistered UE receiving a terminating call, then HSS will return to I-CSCF a Cx-Query Resp message including the name of the S-CSCF that has served the UE before going to Step 107.

If HSS has stored the name of the S-CSCF that has served the UE and the contents of subscription document of the UE requesting a registration stored in HSS have been changed or updated, HSS will return to I-CSCF a Cx-Query Resp message including the name of S-CSCF and the information of the available S-CSCF capability information set, then I-CSCF will further decide whether the returned name of S-CSCF can be used. If it can be used, go to Step 107, otherwise, go to Step 105 and I-CSCF will re-select an S-CSCF.

If there is no S-CSCF stored in HSS that has been assigned to the UE, HSS will return to I-CSCF a Cx-Query Resp message including only the information of the available S-CSCF capability information set before going to Step 105.

Step 105: I-CSCF sends to HSS a Cx-Select-Pull request message, in which the User-Authorization-Type is REGISTRATION_AND_CAPABILITIES, indicating that I-CSCF asks HSS to return the S-CSCF capability information set that has the capability to meet the most strict service subscription requirement of the UE requesting registration, as the input information for selecting an S-CSCF, the Cx-Select-Pull message includes such information as Public User Identity and Private User Identity and so on.

Step 106: After receiving the Cx-Select-Pull message from I-CSCF, HSS returns to I-CSCF a Cx-Select-Pull Resp message, which includes the S-CSCF capability information set that has the capability to meet the most strict service subscription requirement of the UE requesting registration.

Step 107: I-CSCF makes domain-name analysis based on the name of S-CSCF returned by HSS, or selects an S-CSCF from all the S-CSCFs which has the capability to provide service to the UE and also meet the most strict service subscription requirement of the UE requesting registration, then makes domain-name analysis based on the name of the selected S-CSCF, obtains the address of the S-CSCF, and sends a Register message to the S-CSCF. The Register message includes such information as the domain name or address of P-CSCF, Public User Identity, Private User Identity, identifier of the network where P-CSCF is located, and the IP address of the UE requesting a registration and so on.

If I-CSCF is unable to obtain a new S-CSCF using the information of capability information set that has the capability to meet the most strict service subscription requirement of the UE requesting registration, I-CSCF will return a message of registration failure to the UE via P-CSCF and the procedure is over.

Step 108: S-CSCF sends a Cx-Put message to HSS so that HSS stores the name of S-CSCF used by the UE, wherein the Cx-Put message includes such information as Public User Identity and/or Private User Identity, and the name of S-CSCF and so on.

Step 109: HSS returns a Cx-Put Resp message, indicating that it has stored the name of the S-CSCF.

Step 110: After receiving the Cx-Put Resp message from HSS, S-CSCF sends a Cx-Pull message to HSS, requesting to obtain the user's subscription information, wherein the Cx-Pull message includes such information as Public User Subscription and/or Private User Subscription and so on.

Step 111: HSS makes inquiry according to the Public User Subscription and/or Private User Subscription, and returns to S-CSCF a Cx-Pull Resp message including the user's subscription information, i.e. the Cx-Pull Resp message includes user profile information and security information and so on, wherein the user profile information is used for the user to access various service control platforms.

Step 112: S-CSCF, according to the filtering rule obtained from the user profile information, sends the registration information to a related service control platform and performs appropriate service control.

Step 113: S-CSCF returns to the UE a 200OK message via I-CSCF and P-CSCF.

By far, the first registration of a Public User Identity of the UE is completed.

In the above procedures, the role of the Cx-Put message in Step 108 is to request HSS to store the name of S-CSCF serving the user, the Cx-Pull Resp message in Step 109 is only for indicating an acknowledgement of the above request message; the role of the Cx-Pull message in Step 110 is to request HSS for the user's subscription information needed for subsequent processing, and it is the Cx-Pull Resp message in Step 111 that sends the user's subscription information to S-CSCF.

As can be seen from the above description, in the implementation of the prior art, HSS uses one message to confirm the storing of the name of S-CSCF and another one message to return the user's subscription information to S-CSCF, which increases the load on the interface Cx between HSS and S-CSCF.

The above steps of 105 and 106 are triggered due to the incompletion of the information returned by HSS to I-CSCF, i.e. if HSS returns to I-CSCF only the information including the available S-CSCF capability, it will be necessary to trigger Steps 105 and 106 so as to obtain the information set of the S-CSCF capability that has the capability to meet the most strict service subscription requirement of the UE requesting registration.

Meanwhile, the information carried by the request messages in Steps 105 and 103 is basically the same except the difference in the information of the User-Authorization-Type. This difference, however, is only a distinction in type and brings no new information to HSS. Likewise, in Step 106, the information returned by HSS includes no more valuable information for I-CSCF. Therefore, Steps 105 and 106 are redundant steps, increasing the load on the interface between HSS and I-CSCF.

Although the above analysis is based on the procedures for the first registration of a public user identifier of UE, there exists the same problem in the procedures that involve the inquiry of HSS about user's subscription information, such as the procedures for non-first registration of a public user identifier of UE and sessions performed by IMS users, the procedures of inquirying HSS about the name of S-CSCF that serves UE.

In prior art, the Digital cellular telecommunications system (phase 2+) ETSI STANDARDS (EUROPEAN TELECOMMUNICATIONS STANDARDS INSTITUTE, SOPHIA-ANTIPO, FR, vol. 3-CN4, no.V560, December 2003(2003-12), XP014017384 ISSN: 0000-0001) discloses a registration procedure with the HSS, the I-CSCF, and the S-CSCF etc. And a method for allocating S-CSCF to the subscriber is also disclosed in an international patent whose international publication number is WO 03/075596 A ((NOKIA CORP [FI]; KAUPPINEN RISTO [FI]) 12 September 2003 (2003-09-12)).

In an international application (WO 03/075596A), a technique in which there is allocated one of a plurality of serving call state control function to a subscriber is disclosed. The technique includes: receiving load information from at least one serving call state control function, and determining a serving call state control function for the subscriber in dependence on the received load information, wherein the receiving step includes receiving the load information during subscriber registration in signal received a serving call state control function to an interrogating call state control information. The load information is used to determine the serving call state control function.

### Summary of the Invention

In view of the above, the object of this invention is to provide two methods for reducing the load on HSS's interface so as to optimize the related procedures and reduce the load on HSS's interface. And two kinds of HSS are also disclosed by the present invention.

To attain the above object, the technical solution in accordance with this invention is implemented as follows:
A method , according to claim 1, for reducing load of Home Subscription Server (HSS)'s interface, including:
   a Serving Call Session Control Function (S-CSCF) sending one message comprising a request for storing a name of the S-CSCF and for downloading user's subscription information to a HSS;
   the HSS storing the name of the S-CSCF in the message, returning to the S-CSCF a response message comprising the user's subscription information.

Preferably, the method further includes: after receiving request message from Interrogating Call Session Control Function (I-CSCF) for inquiring about the information of S-CSCF, HSS returning to the I-CSCF an inquiry response message including the information needed for determining an S-CSCF; the I-CSCF, according to the returned information in the response message, determining the S-CSCF that has the capability to serve the User Equipment (UE) and forwarding the request message of the UE to the determined S-CSCF.

Preferably, when a Public User Identity performs registration for the first time,

If there is at least one Public User Identity of the UE requesting registration that has been registered in the HSS and the registration is still valid, and if the HSS decides there is no need for the I-CSCF to re-select an S-CSCF to serve the UE, the information needed for determining an S-CSCF includes the name of the S-CSCF that is serving the UE;

If there is at least one Public User Identity of the UE of which the registration status is unregistered or the registration has expired thereof but the HSS still stores the name of the S-CSCF that was used by the UE last time, or if the UE has been assigned an S-CSCF by the HSS as an unregistered party that is called, the information needed for determining an S-CSCF includes the name of the S-CSCF that served the UE;

If HSS has stored the name of the S-CSCF that has served the UE and the HSS is not sure whether it is needed for the I-CSCF to re-select an S-CSCF to serve the UE, the information needed for determining an S-CSCF includes the name of the S-CSCF that has served the UE and the S-CSCF capability information set that has the capability to meet the most strict service subscription requirement of the UE requesting registration.

If the HSS does not store the name of the assigned S-CSCF that has served the UE , then the information needed for determining an S-CSCF includes the S-CSCF capability information set that has the capability to meet the most strict service subscription requirement of the UE requesting registration.

Preferably, If the information returned from the HSS includes only the name of S-CSCF, the method for I-CSCF to determine the S-CSCF that has the capability to serve the UE includes: the I-CSCF using the S-CSCF in the returned information as the S-CSCF that has the capability to serve the user;

If the information returned from the HSS includes only the S-CSCF capability information set that has the capability to meet the most strict service subscription requirement of the UE requesting registration, the method for I-CSCF to determine the S-CSCF that has the capability to serve the UE includes: the I-CSCF selecting a new S-CSCF that has the capability to meet the current service requirement of the UE according to the S-CSCF capability information set in the returned response message, and determining the newly-selected S-CSCF as the S-CSCF that has the capability to serve the UE;

If the information returned from the HSS includes the name of S-CSCF and S-CSCF capability information set that has the capability to meet the most strict service subscription requirement of the UE requesting registration, the method for I-CSCF to determine the S-CSCF that has the capability to serve the UE includes: the I-CSCF verifying according to the returned name of S-CSCF whether the S-CSCF has the capability to meet the current service requirement of the UE, if yes, determining the returned S-CSCF is the S-CSCF that has the capability to serve the UE, otherwise, selecting a new S-CSCF that has the capability to meet the current service demand of the UE according to the S-CSCF capability information set in the response message, and determining the newly-selected S-CSCF is the S-CSCF that has the capability to serve the UE.

Preferably, after the HSS receives the request message for inquiring the information of S-CSCF from the I-CSCF, further including: deciding according to the user's subscription information and the policy of the operator that the UE is permitted to perform a registration request in the current network before subsequent steps are executed.

Preferably, when a Public User Identity performs registration for the first time,

The request message received by the HSS from the I-CSCF for inquiring the information of S-CSCF is carried by a Cx-Query message, and the inquiry response message returned to the I-CSCF from the HSS including the information needed for determining an S-CSCF is carried by a Cx-Query Resp message, or,

The request message received by the HSS from the I-CSCF for inquiring the information of S-CSCF is carried by a Cx-Select-pull message, the inquiry response message returned to the I-CSCF from the HSS including the information needed for determining an S-CSCF is carried by a Cx-Select-pull Resp message.

Preferably, when the UE is in a session,

If the HSS has stored the name of the S-CSCF that has served or is serving the UE, the HSS will, according to system configuration, return to the I-CSCF a response message including the name of the S-CSCF, and the I-CSCF will forward the session request message of the UE to the S-CSCF; or the HSS will return to the I-CSCF a response message including the information of the name of the S-CSCF and the S-CSCF capability information set that has the capability to meet the most strict service subscription requirement of the UE, and the I-CSCF will determine an S-CSCF that has the capability to serve the user and forwards the session request message of the UE to the determined S-CSCF;

If there is no S-CSCF stored in the HSS that has served the UE, the HSS will directly return to the I-CSCF a response message including the S-CSCF capability information set that has the capability to meet the most strict service subscription requirements of the UE before the I-CSCF determines an S-CSCF that has the capability to serve the UE and forwards the session request message of the user to the determined S-CSCF.

Preferably, when the UE is in a session,

The request message received by the HSS from the I-CSCF for inquiring about the information of S-CSCF is carried by a Cx-Location-Query message, and the inquiry response message returned to I-CSCF from HSS including the information needed for determining an S-CSCF is carried by a Cx-Location-Query Resp message, or,

The request message received by the HSS from the I-CSCF for inquiring about the information of S-CSCF is carried by a Cx-Select-Pull message, and the inquiry response message returned to the I-CSCF from the HSS including the information needed for determining an S-CSCF is carried by a Cx-Select-Pull Resp message.

Preferably, the message including the request for storing the name of the S-CSCF and for downloading the user's subscription information is carried by a Cx-Put message, and the response message returned to S-CSCF by HSS is carried by a Cx-Put Resp message, or,

The message including the request for storing the name of the S-CSCF and for downloading the user's subscription information is carried by a Cx-Pull message, and the response message returned to the S-CSCF by the HSS is carried by a Cx-Pull Resp message.

Preferably, the user's subscription information in the response message returned to the S-CSCF including at least the user profile information.

A method, according to claim 11, for reducing load of Home Subscription Server (HSS)'s interface, including:
sending one message for inquiring about the information of S-CSCF, from an I-CSCF to a HSS;
if the HSS has stored a name of an S-CSCF that has served or is serving the UE, the HSS returning to the I-CSCF an inquiry response message comprising the name of the S-CSCF or comprising the name of the S-CSCF and an S-CSCF capability information set that has the capability to meet the most strict service subscription requirement of the UE requesting registration;
if there is no assigned S-CSCF that has served or is serving the UE stored in the HSS, the HSS returning to the I-CSCF an inquiry response message comprising an S-CSCF capability information set that has the capability to meet the most strict service subscription requirement of the UE requesting registration (204a);
the I-CSCF determining a S-CSCF that has the capability to serve a UE based on the inquiry response message and forwarding request message of the UE to the determined S-CSCF.

Preferably, when a Public User Identity performs registration for the first time,

If there is at least one Public User Identity of the UE requesting registration that has been registered in the HSS and the registration is still valid, and the HSS determines there is no need for the I-CSCF to re-select an S-CSCF to serve the UE, then the information needed for determining an S-CSCF includes the name of the S-CSCF that is serving the UE;

If there is at least one Public User Identity of the UE requesting registration of which the registration status is unregistered or the registration has expired, but the HSS still stores the name of the S-CSCF that was used by the UE last time, or if the UE has been assigned an S-CSCF by the HSS as an unregistered party that is called, then the information needed for determining an S-CSCF includes the name of the S-CSCF that has served the UE;

If HSS has stored the name of the S-CSCF that has served or is serving the UE and the HSS is not sure whether it is needed for the I-CSCF to re-select an S-CSCF to serve the UE, then the information needed for determining an S-CSCF includes the name of the S-CSCF that has served or is serving the UE and the S-CSCF capability information set that has the capability to meet the most strict service subscription requirement of the UE requesting registration.

If there is no assigned S-CSCF that has served the UE stored in the HSS, then the information needed for determining an S-CSCF includes the S-CSCF capability information set that has the capability to meet the most strict service subscription requirement of the UE requesting registration.

Preferably, if the information returned from the HSS includes only the name of S-CSCF, the method for I-CSCF to determine the S-CSCF that has the capability to serve the UE includes: the I-CSCF determining the S-CSCF in the returned information is the S-CSCF that has the capability to serve the UE;

If the information returned from the HSS includes only the S-CSCF capability information set that has the capability to meet the most strict service subscription requirement of the UE requesting registration, then the method for I-CSCF to determine the S-CSCF that has the capability to serve the UE includes: the I-CSCF selecting a new S-CSCF that has the capability to meet the current service requirement of the UE according to the S-CSCF capability information set in the returned response message, and determining the newly-selected S-CSCF as the S-CSCF that has the capability to serve the UE;

If the information returned from the HSS includes the name of S-CSCF and S-CSCF capability information set that has the capability to meet the most strict service subscription requirement of the UE requesting registration, then the method for I-CSCF to determine the S-CSCF that has the capability to serve the UE includes: the I-CSCF deciding according to the returned name of S-CSCF whether the S-CSCF has the capability to meet the current service requirement of the UE, if yes, determining the S-CSCF in the returned information is the S-CSCF that has the capability to serve the UE, otherwise, selecting a new S-CSCF that has the capability to meet the current service requirement of the UE according to the S-CSCF capability information set in the response message, and determining the newly-selected S-CSCF as the S-CSCF that has the capability to serve the user.

Preferably, after the HSS receives the message for inquiring about the information of S-CSCF from the I-CSCF, further including: deciding according to the user's subscription information and the policy of the operator that the UE is permitted to perform a registration request in the current network before subsequent steps is executed.

Preferably, when a public user identifier performs registration for the first time,

The message received by the HSS from the I-CSCF for inquiring about the information of S-CSCF is carried by a Cx-Query message, and the inquiry response message returned to the I-CSCF from the HSS including the information needed for determining an S-CSCF is carried by a Cx-Query Resp message, or,

The message received by the HSS from the I-CSCF for inquiring about the information of S-CSCF is carried by a Cx-Select-Pull message, and the inquiry response message returned to the I-CSCF from the HSS including the information needed for determining an S-CSCF is carried by a Cx-Select-Pull Resp message.

Preferably, wherein, when the UE is in a session,

If the HSS has stored the name of the S-CSCF that has served or is serving the UE, the HSS will, according to system configuration, return to the I-CSCF a response message including the name of S-CSCF, and the I-CSCF will forward the session request message of the UE to the S-CSCF; or the HSS will return to the I-CSCF a response message including the S-CSCF name and S-CSCF capability information set that has the capability to meet the most strict service subscription requirement of the UE, and the I-CSCF will determine an S-CSCF that has the capability to serve the user and forwards the session request message of the UE to the determined S-CSCF;

If there is no S-CSCF stored in the HSS that has served the UE, the HSS will directly return to I-CSCF a response message including the S-CSCF capability information set that has the capability to meet the most strict service subscription requirement of the UE before I-CSCF determines an S-CSCF that has the capability to serve the UE and forwards the session request message of the UE to the determined S-CSCF.

Preferably, when the UE is in a session,

The message received by the HSS from the I-CSCF for inquiring about the information of S-CSCF is carried by a Cx-Location-Query message, and the inquiry response message returned to the I-CSCF from the HSS including the information needed for determining an S-CSCF is carried by a Cx-Location-Query Resp message, or,

The message received by the HSS from the I-CSCF for inquiring about the information of S-CSCF is carried by a Cx-Select-Pull message, and the inquiry response message returned to the I-CSCF from the HSS including the information needed for determining an S-CSCF is carried by a Cx-Select-Pull Resp message.

An HSS, according to claim 18, is configured to receive one message comprising a request for storing a name of an S-CSCF and for downloading user's subscription information, from the S-CSCF;
the HSS being further, configured to store the name of the S-CSCF in the message, and return to the S-CSCF a response message comprising the user's subscription information, upon the first unit receiving the message.
An HSS, according to claim 19, is, configured to receive one message for inquiring about information of S-CSCF, from an I-CSCF;
the HSS being further configured to return to the I-CSCF, if the HSS has stored a name of an S-CSCF that has served or is serving the UE, an inquiry response message comprising the name of the S-CSCF or comprising the name of the S-CSCF and an S-CSCF capability information set that has the capability to meet the most strict service subscription requirement of the UE requesting registration; or return to the I-CSCF, if there is no assigned S-CSCF that has served or is serving the UE stored in the HSS, an inquiry response message comprising an S-CSCF capability information set that has the capability to meet the most strict service subscription requirement of the UE requesting registration.

In accordance with this invention, when receiving the request message from S-CSCF including the request for storing the name of the S-CSCF and for downloading the user's subscription information, HSS first stores the S-CSCF name in the request message, and then returns the requested user's subscription information to the S-CSCF sending the request, thus may simplifying the steps for inquiring about user's subscription information, optimizing the service procedure, and reducing the load of HSS's interface.

In addition, during registration of a certain public user identifier of the user or during a session of the user, after receiving the request message from I-CSCF including the request for the S-CSCF name or the S-CSCF capability information set, HSS returns directly to I-CSCF the response message including the S-CSCF name and/or capability information set that has the capability to meet the most strict service subscription requirement of the user, and then continues with the subsequent steps, thus may simplifying the redundant steps in the prior art, optimizing the registration procedure of the user as well as the session procedure, and reducing the load of HSS's interface.

The present invention makes no impact on the existing network architecture and service implementation, nor is it needed to modify the existing interface specifications, thus being highly compatible and expandable.

### Brief Description of the Drawings

Figure 1 is the flowchart of the first registration of public user identifier based on the IMS architecture in the prior art;
Figure 2 is the flowchart of the first registration of public user identifier based on the IMS architecture in a preferred embodiment in accordance with this invention;
Figure 2A is the flowchart of the first registration of public user identifier based on the IMS architecture in another preferred embodiment in accordance with this invention;
Figure 3 is the flowchart of registration of public user identifier other than the first time based on the IMS architecture in accordance with this invention;
Figure 4 is part of the flowchart of a call in which the user is called based on the IMS architecture in a preferred embodiment in accordance with this invention;
Figure 4A is part of the flowchart of a call in which the user is called based on the IMS architecture in another preferred embodiment in accordance with this invention.

### Embodiments of the Invention

In order to make the technical solution of this invention clearer, a further detailed description is hereinafter given with reference to specific preferred embodiments and the accompanying drawings.

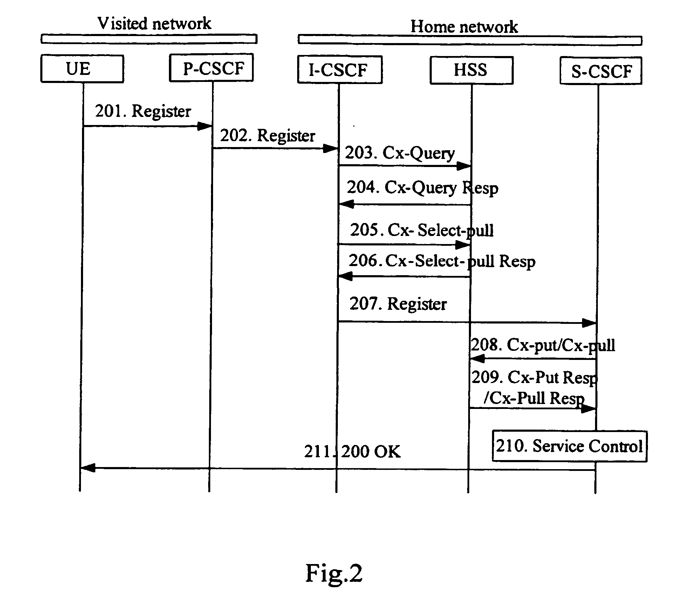

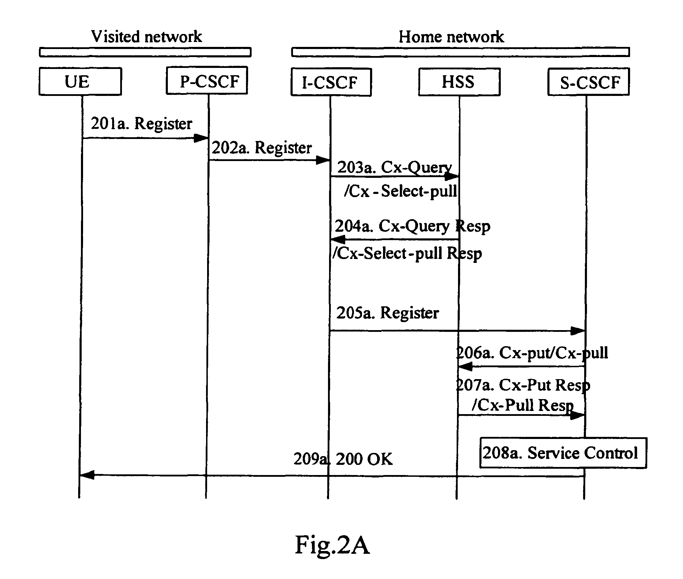

Figure 2 is the flowchart of the first registration of a public user identifier based on the IMS architecture in a preferred embodiment in accordance with this invention. In this preferred embodiment, SIP is used as the signaling control protocol for IP multimedia sessions, the Diameter protocol is used in the Cx interface between HSS and I-CSCF/S-CSCF to transfer related information, the function of hiding network topology is not needed in this preferred embodiment, and UE is located in a visited network.

Step 201: After establishing a physical connection with the bearer, UE sends a Register message to the P-CSCF in the visited network where the UE is located. The Register message includes such information as Public User Identity, Private User Identity, domain name of home network, and IP address of the UE requesting registration and so on.

Step 202: P-CSCF receiving the Register message makes analysis of the domain-name information of home network in the Register message so as to obtain the address of the access point of the home network, I-CSCF, and then forwards the Register message of the UE to the I-CSCF in the home network. The forwarded Register message includes such information as the name or address of P-CSCF, Public User Identity, Private User Identity, identity of the visited network where the P-CSCF is located, and IP address of the UE requesting registration and so on.

Step 203: I-CSCF sends a Cx-Query message to HSS. The User-Authorization-Type in the Cx-Query message is REGISTRATION, indicating the Cx-Query message is a registration request message. The Cx-Query message includes such information as public user identifier, private user identifier, and identifier of the network where the P-CSCF is located and so on.

Step 204: After receiving the Cx-Query message from I-CSCF, HSS first decides according to the subscription information of the user and the policy of the operator whether the UE is permitted to perform a registration request in the current network, if not permitted, directly returns to I-CSCF a Cx-Query Resp message including the rejection to the register message, I-CSCF returns a registration failure message to UE via P-CSCF, and the procedure is over;

If the UE is permitted to perform a registration request in the current network, HSS will return to I-CSCF appropriate information according to whether HSS has stored the name of the S-CSCF that has served the UE and whether the stored contents of the subscription document of the UE requesting registration have been changed or updated.

If at least one Public User Identity of the UE requesting registration has been registered in HSS, i.e. HSS has stored the name of the S-CSCF that has served the UE and the S-CSCF is still within the term of validity, and the stored contents of the subscription document of the UE requesting registration have not been changed or updated, then after HSS returns to I-CSCF a Cx-Query Resp message including the name of the S-CSCF currently serving the user, Step 207 will be executed;

If the registration status of at least one Public User Identity of the user is unregistered or the registration thereof has expired while HSS still has the name of the S-CSCF used by the user last time or the user has been assigned an S-CSCF by HSS as an unregistered user receiving a terminating call, then after HSS returns to I-CSCF a Cx-Query Resp message including the name of the S-CSCF that has served the user, Step 207 will be executed;

If HSS has stored the name of the S-CSCF that has served or is serving the UE and HSS believes that it might be needed for I-CSCF to re-select an S-CSCF to serve the user, e.g. the content of the subscription document of the UE requesting registration stored in HSS have been changed or updated, then, after HSS returns to I-CSCF a Cx-Query Resp message including the information of the S-CSCF name and the available S-CSCF capability information set, I-CSCF further decides whether the returned name of S-CSCF can be used, if it can be used, Step 207 will be executed, otherwise, Step 205 will be executed and I-CSCF will re-select an S-CSCF;

If there is not the name of the S-CSCF in HSS that has been assigned and has served the UE, then, after HSS returns to I-CSCF a Cx-Query Resp message including only the information of the available S-CSCF capability information set, Step 205 will be executed.

Step 205: I-CSCF sends to HSS a Cx-Select-Pull request message. The User-Authorization-Type in Cx-Select-Pull request message is REGISTRATION_AND_CAPABILITIES, indicating definitely that I-CSCF requests HSS to return the S-CSCF capability information set that has the capability to meet the most strict service subscription requirement of the UE requesting registration as the input information for selecting an S-CSCF. The Cx-Select-Pull request message includes information such as Public User Identity and Private User Identity and so on.

Step 206: After receiving the Cx-Select-Pull request message from I-CSCF, HSS returns to I-CSCF a Cx-Select-Pull Resp message, which includes the S-CSCF capability information set that has the capability to meet the most strict service subscription requirement of the UE requesting registration.

Step 207: I-CSCF makes domain-name analysis according to the returned name of S-CSCF from HSS or selects an S-CSCF from all the S-CSCFs that has the capability to serve the user from the S-CSCF capability information set that has the capability to meet the most strict service subscription requirement of the UE requesting registration before making domain-name analysis of the name of the S-CSCF so as to obtain the address of S-CSCF, and sends to the S-CSCF a Register message, which includes information such as the domain name or address of P-CSCF, Public User Identity, Private User Identity, identity of the network where the P-CSCF is located, and IP address of the UE requesting registration and so on;

If I-CSCF is unable to obtain a new S-CSCF according to the information of the capability information set that has the capability to meet the most strict service subscription requirement of the UE requesting registration, I-CSCF will return to the UE a registration failure message, and the procedure is over.

Step 208: S-CSCF sends to HSS a request message including the request for storing the name of the S-CSCF and for downloading the user's subscription information. The request message includes information such as Public User Identity and/or Private User Identity, and name of S-CSCF; and can be carried by Cx-Put message or Cx-Pull message and so on.

Step 209: After receiving the message from S-CSCF requesting for storing the name of the S-CSCF and for downloading the user's subscription information, HSS first stores the S-CSCF name in the request message, then makes inquiry locally according to the Public User Identity and/or private user identifier, and directly returns to S-CSCF a response message including the user's subscription information. The user's subscription information in the response message includes user profile information, security information and etc., wherein the user profile information is used for the user to access various service control platforms. The response message is carried by a Cx-Put Resp message or a Cx-Pull Resp message.

Step 210: S-CSCF, according to the filtering rule obtained from the user profile information, sends the Register message to the related service control platform to perform appropriate service control procedures.

Step 211: S-CSCF returns to UE the 200OK message via I-CSCF and P-CSCF.

By far, the first registration of one public user identifier of the user has been completed. In the above registration procedure, the step of S-CSCF making inquiry of HSS for user profile information is simplified, thus the load on HSS's interface is reduced.

Meanwhile, Steps 205 and 206 can be simplified as well in the above procedure, making I-CSCF obtain the needed information by one message. The procedure with Steps 205 and 206 deleted is shown in Figure 2A. As the difference between Figure 2 and Figure 2A is only that Steps 205 and 206 are deleted and Steps 201a - 203a in Figure 2A are completely the same as Steps 201 - 203 in Figure 2, no repeated description is given here. In Step 204a, the following operations are performed:

After receiving the Cx-Query message from I-CSCF, HSS first decides, according to the subscription information of the user and the policy of the operator, whether the UE is permitted to perform a registration request in the current network, if not permitted, directly returns to I-CSCF a Cx-Query Resp message including the rejection to the Register message, then I-CSCF returns a registration failure message to the UE via P-CSCF, and the procedure is over;

If the UE is permitted to perform a register request in the current network, HSS will return to I-CSCF appropriate information according to whether HSS has stored the name of S-CSCF that has served the UE and whether the stored contents of the subscription document of the UE requesting registration in HSS have been changed or updated.

If at least one public user identifier of the UE requesting registration has been registered in HSS, i.e. HSS has stored the name of the S-CSCF that has served the UE and the S-CSCF is still within the term of validity, and HSS determines that it is not needed for I-CSCF to re-select an S-CSCF to serve the user, e.g. the stored contents of the subscription document of the UE requesting registration in HSS have not been changed or updated, then HSS will return to I-CSCF a Cx-Query Resp including the name of the current S-CSCF that serves the user before Step 205a is executed;

If the registration status of at least one public user identifier of the user is unregistered or the registration thereof has expired, but HSS has stored the name of the S-CSCF used by the user last time, or the user has been assigned an S-CSCF by HSS as an unregistered user receiving a terminating call, then HSS will return to I-CSCF a Cx-Query Resp message including the name of the S-CSCF that has served the user before Step 205a is executed;

If HSS has stored the name of the S-CSCF that has served or is serving the UE and HSS is not sure whether it is needed for I-CSCF to re-select an S-CSCF to serve the user, e.g. the contents of the subscription document of the UE requesting registration stored in HSS have been changed or updated, then, after HSS returns to I-CSCF a response message including the information of the S-CSCF name and the S-CSCF capability information set that has the capability to meet the most strict service subscription requirement of the UE requesting registration, Step 205a will be executed;

If there is not the name of the S-CSCF in HSS that has been assigned and has served the UE, then, after HSS returns to I-CSCF a response message including the S-CSCF capability information set that has the capability to meet the most strict service subscription requirement of the UE requesting registration, Step 205a will be executed.

In the above preferred embodiment, the inquiry message received by HSS from I-CSCF is carried by Cx -Query message, the response message returned to I-CSCF from HSS is carried by Cx-Query Resp message. In practical applications, the inquiry message received by HSS from I-CSCF can also be carried by Cx-Select-pull message; the response message returned to I-CSCF from HSS can also be carried by Cx-Select-pull Resp message.

Correspondingly, Step 205a in Figure 2A is equal to Step 207 in Figure 2, and the operations performed in Step 205a is as follows:

I-CSCF determines, according to the returned information from HSS, the S-CSCF that has the capability to serve the UE and makes domain-name analysis according to the name of the S-CSCF to obtain the address of the S-CSCF. The specific procedure is: If HSS returns a response message including only the name of S-CSCF, I-CSCF determines that the S-CSCF is a S-CSCF can serve the UE. If HSS returns a response message including only the S-CSCF capability information set that has the capability to meet the most strict service subscription requirement of the UE requesting registration, I-CSCF selects a new S-CSCF that has the capability to meet the current service demand of the UE based on the S-CSCF capability information set, and determines that the newly-selected S-CSCF is the S-CSCF that has the capability to serve the user. If HSS returns a response message including the name of the S-CSCF that has served the UE as well as the S-CSCF capability information set that has the capability to meet the most strict service subscription requirement of the UE requesting registration, I-CSCF decides according to the returned S-CSCF name whether the S-CSCF has the capability to meet the current service demand of the UE, if yes, determines that the returned S-CSCF is the S-CSCF that has the capability to serve the user; otherwise, selects a new S-CSCF that has the capability to meet the current service requirement of the UE according to the S-CSCF capability information set in the response message and determines that the newly-selected S-CSCF is the S-CSCF that has the capability to serve the user.

Steps 206a - 209a are completely the same as Steps 208 - 211 in Figure 2, and no further description is given here.

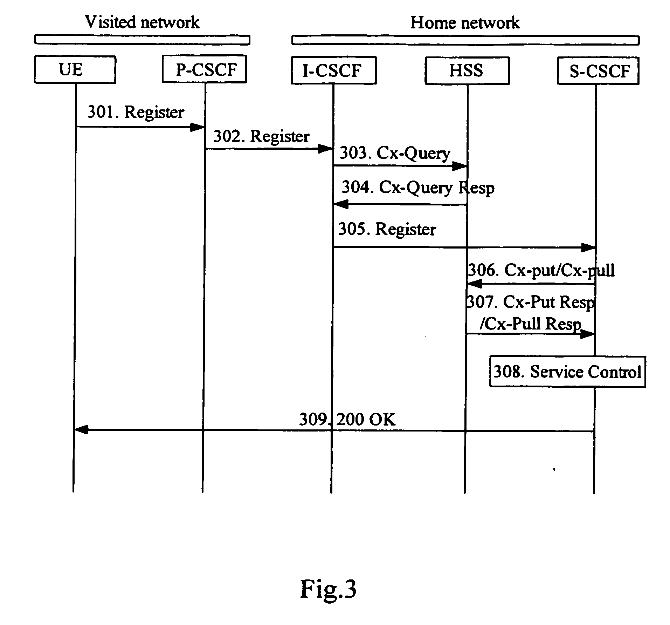

Figure 3 is the flowchart for initiating a non-first registration of public user identifier based on the IMS architecture in accordance with the invention. In this preferred embodiment, SIP is used as the signaling control protocol for IP multimedia sessions, the Diameter protocol is used in the Cx interface between HSS and I-CSCF and between HSS and S-CSCF for transferring related information, there is no related user profile information in the S-CSCF determined through analysis by I-CSCF, the function of hiding network topology is not needed in this preferred embodiment, and UE is located in a visited network.

Step 301: UE sends a Register message to the P-CSCF in the visited network where the UE is located. The Register message includes information such as public user identifier, private user identifier, domain name of home network, and IP address of the UE requesting registration and so on.

Step 302: P-CSCF receiving the Register message makes analysis of the domain-name information of home network in the Register message so as to obtain the address of the access point of the home network, I-CSCF, and then forwards the Register message of the UE to the I-CSCF in the home network. The forwarded Register message includes information such as the name or address of P-CSCF, public user identifier, private user identifier, identifier of the visited network where the P-CSCF is located, and IP address of the UE requesting registration and so on.

Step 303: I-CSCF sends a Cx-Query message to HSS. The Cx-Query message includes information such as public user identifier, private user identifier, and identifier of the network where the P-CSCF is located and so on.

Step 304: After receiving the Cx-Query message from I-CSCF and determining that the UE has registered, HSS directly returns to I-CSCF a Cx-Query Resp message including the indication that an S-CSCF has been assigned for the UE and the Cx-Query Resp message includes the name of the S-CSCF that has served the user.

Step 305: I-CSCF makes domain-name analysis based on the name of S-CSCF returned from HSS, obtains the address of the S-CSCF, and sends a Register message to the S-CSCF. The Register message includes information such as the domain name or address of P-CSCF, public user identifier, private user identifier, identifier of the network where P-CSCF is located, and IP address of the UE requesting registration and so on.

Step 306: S-CSCF sends to HSS a request message including the request for storing the name of the S-CSCF and for downloading the user's subscription information. The request message includes information such as public user identifier and/or private user identifier, and name of S-CSCF; and can be carried by Cx-Put message or Cx-Pull message and so on.

Step 307: After receiving the message from S-CSCF requesting for storing the name of the S-CSCF and for downloading the user's subscription information, HSS first stores the S-CSCF name in the request message, then makes inquiry locally according to the public user identifier and/or private user identifier, and directly returns to the S-CSCF a response message including the user's subscription information. The user's subscription information in the response message includes user profile information, security information and etc., wherein the user profile information is used for the user to access various service control platforms. The response message is carried by a Cx-Put Resp message or a Cx-Pull Resp message.

Step 308: S-CSCF, according to the filtering rule obtained from the user profile information, sends the registration information to the related service control platform to perform appropriate service control procedures.

Step 309: S-CSCF returns to UE a 200OK message via I-CSCF and P-CSCF.

By far, the re-registration of a public user identifier of the UE has been completed and the step of S-CSCF making inquiry to HSS for user profile information is simplified, thus the load on HSS's interface is reduced.

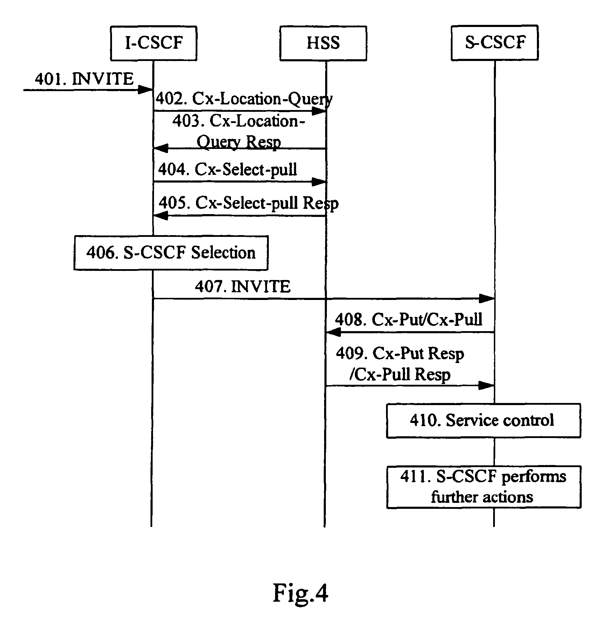

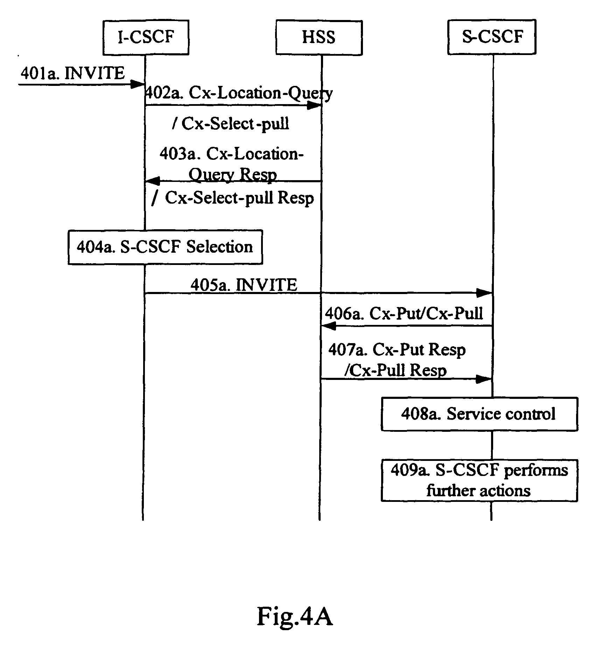

Figure 4 shows part of the flowchart of a preferred embodiment which is based on the IMS architecture and in which the UE is called in accordance with this invention. In this preferred embodiment, SIP is used as the signaling control protocol for IP multimedia sessions, the Diameter protocol is used in the Cx interface between HSS and I-CSCF and between HSS and S-CSCF for transferring related information, there is no related user profile information stored in the S-CSCF that I-CSCF selected, and the public user identifier used by the UE has not been registered.

Step 401: I-CSCF receives a forwarded INVITE message from the calling UE, and the forwarded INVITE message includes the information of a public user identifier.

Step 402: I-CSCF sends to HSS a Cx-Location-Query message inquiring the information of the current location of the UE.

Step 403: Based on the pre-configuration of system, after HSS returns to I-CSCF a Cx-Location-Query Resp message including the indication that the public user identifier has not been registered, Step 404 is executed; or after HSS returns to I-CSCF a message including the name of the S-CSCF that has been assigned for the UE before and the information of the available S-CSCF capability information set, Step 404 is executed; or after HSS returns to I-CSCF a Cx-Location-Query Resp message including the name of the S-CSCF that has been assigned for the UE before, Step 407 is executed.

Step 404: I-CSCF sends a Cx-Select-Pull message to HSS to request for the S-CSCF capability information set that has the capability to meet the most strict service subscription requirement. The parameters carried in the request message mainly include information such as public user identifier and so on.

Step 405: After receiving the Cx-Select-Pull message, HSS returns to I-CSCF a Cx-Select-Pull Resp message which is needed by I-CSCF and includes the S-CSCF capability information set that has the capability to meet the most strict service subscription requirement of the UE.

Step 406: I-CSCF selects, according to the S-CSCF capability information set returned by HSS, the S-CSCF that has the capability to serve the UE and obtains the address of the S-CSCF by analysis based on the name of the S-CSCF before performing Step 407;

If I-CSCF can not obtain the needed address of the S-CSCF based on the S-CSCF capability information set returned by HSS, I-CSCF will designate an S-CSCF to serve the unregistered public user identifier, and then Step 407 is executed.

Step 407: I-CSCF forwards the received INVITE message to the determined S-CSCF.

Step 408: The S-CSCF receiving the INVITE message sends to HSS a request message including the request for storing the name of the S-CSCF and for downloading the user's subscription information. The INVITE message includes information such as public user identifier and/or private user identifier, and S-CSCF name, and can be carried by a Cx-Put message or a Cx-Pull message and so on.

Step 409: After receiving the message from the S-CSCF requesting for storing the name of the S-CSCF and for downloading the user's subscription information, HSS first stores the S-CSCF name in the request message, then makes inquiry locally according to the public user identifier and/or private user identifier, and directly returns to the S-CSCF a response message including the user's subscription information. The user's subscription information in the response message includes user profile information, security information and etc., wherein the user profile information is used for the UE to access various service control platforms. The response message is carried by a Cx-Put Resp message or a Cx-Pull Resp message.

Step 410: S-CSCF, according to the filtering rule obtained from the user profile information, sends the registration information to the related service control platform to perform appropriate service control procedures.

Step 411: S-CSCF continues with the subsequent operations.

The above call procedure simplifies the step of S-CSCF inquiring the user profile information from HSS, thus reducing the load on the HSS's interface.

Furthermore, Steps 404 and 405 in the above procedure can be simplified so that I-CSCF could obtain the needed information by one interaction. The procedure with Steps 404 and 405 simplified is shown in Figure 4A. As the difference between Figure 4A and Figure 4 only lies in that there are no Steps 404 and 405 in Figure 4A ,so Steps 401a - 402a in Figure 4A are completely the same as Steps 401 - 402 in Figure 4, no repeated description is given here. In Step 403a, the following operation is performed:

After receiving the message inquiring the information of the current location of the UE sent by I-CSCF, HSS decides whether it has stored the name of the S-CSCF that has served the UE, if HSS has stored the name of the S-CSCF that has served the UE, then, according to the system configuration, HSS returns to I-CSCF a response message including the S-CSCF name or including the information of the S-CSCF name and the S-CSCF capability information set that has the capability to meet the most strict service subscription requirement of the UE before Step 404a is executed;

If there is no S-CSCF that has served the UE been stored in HSS, HSS will just return a response message including the S-CSCF capability information set that has the capability to meet the most strict service subscription requirement of the UE before Step 404a is executed.

Correspondingly, Step 404a in Figure 4A is equal to Step 406 in Figure 4 and the operation performed in Step 404a is as follows:

I-CSCF determines the S-CSCF that has the capability to serve the UE according to the information returned from HSS, and makes domain-name analysis based on the name of the S-CSCF to obtain the address thereof. The specific procedure is: If HSS returns a response message including only the name of S-CSCF, I-CSCF determines the S-CSCF is the S-CSCF that has the capability to serve the user; if HSS returns a response message including only the information of the S-CSCF capability information set that has the capability to meet the most strict service subscription requirement of the UE requesting registration, I-CSCF selects a new S-CSCF that has the capability to meet the current service requirement of the user according to the S-CSCF capability information set and determines the newly selected S-CSCF is the S-CSCF that has the capability to serve the user; if HSS returns a response message including the name of the S-CSCF that has served the UE and the S-CSCF capability information set that has the capability to meet the most strict service subscription requirement of the UE requesting registration, I-CSCF decides according to the returned S-CSCF name whether the S-CSCF has the capability to meet the current service requirement of the UE, if yes, determines the S-CSCF as S-CSCF that has the capability to serve the user, otherwise, selects a new S-CSCF that has the capability to meet the current service requirement of the UE according to the S-CSCF capability information set in the response message and determines the newly-selected S-CSCF is the S-CSCF that has the capability to serve the user.

If I-CSCF can not obtain the needed S-CSCF address by analysis of the HSS-returned the S-CSCF capability information set that has the capability to meet the most strict service subscription requirement of the UE requesting registration, I-CSCF will designate an S-CSCF to serve the unregistered public user identifier.

The above inquiry message from I-CSCF received by HSS is carried by a Cx-Location-Query message and the response message returned by HSS to I-CSCF is carried by a Cx-Location-Query Resp message. Alternatively, the above inquiry message from I-CSCF received by HSS can be carried by a Cx-Select-Pull message and the response message returned by HSS to I-CSCF can be carried by a Cx-Select-Pull Resp message.

Steps 405a - 409a are completely the same as Steps 407 - 411 in Figure 4, and no further description is given here.

The foregoing is only preferred embodiments of this invention and should not be construed as limiting the protection scope thereof. The scope of this invention is defined by the appended claims.

## Claims

1. A method for reducing the load of a Home Subscriber Server, HSS's, interface, comprising:
a Serving Call Session Control Function, S-CSCF, sending one message to a HSS, the message comprising a request for storing the name of the S-CSCF at the HSS and for downloading user's subscription information from the HSS to the S-CSCF (206a);
the HSS storing the name of the S-CSCF which sent the message and returning to the S-CSCF a response message comprising the user's subscription information (207a).

2. The method according to Claim 1, further comprising: upon receiving a request message from Interrogating Call Session Control function, I-CSCF, for inquiring about the information of S-CSCF (203a), the HSS returning to the I-CSCF an inquiry response message comprising the information needed for determining an S-CSCF (204a); according to the returned information in the response message, the I-CSCF determining the S-CSCF that has the capability to serve a User Equipment UE, and forwarding the request message of the UE to the determined S-CSCF (205a).

3. The method according to Claim 2, wherein, when a Public User Identity performs registration for the first time,
if there is at least one Public User Identity of the UE requesting registration that has been registered in the HSS and the registration is still valid, and if the HSS decides there is no need for the I-CSCF to re-select an S-CSCF to serve the UE, said information needed for determining the S-CSCF comprises the name of the S-CSCF that is serving the UE;
if there is at least one Public User Identity of the UE of which the registration status is unregistered or the registration has expired thereof but the HSS still stores the name of the S-CSCF that was used by the UE last time, or if the UE has been assigned an S-CSCF by the HSS as an unregistered party that is called, said information needed for determining the S-CSCF comprises the name of the S-CSCF that has served the UE;
if HSS has stored the name of the S-CSCF that has served the UE and the HSS is not sure whether it is needed for the I-CSCF to re-select an S-CSCF to serve the UE, said information needed for determining an S-CSCF comprises the name of the S-CSCF that has served the UE and the S-CSCF capability information set that has the capability to meet the most strict service subscription requirement of the UE requesting registration;
if the HSS does not store the name of the assigned S-CSCF that has served the UE, then said information needed for determining an S-CSCF comprises the S-CSCF capability information set that has the capability to meet the most strict service subscription requirement of the UE requesting registration (204a).

4. The method according to Claim 3, wherein,
if the information returned from the HSS comprises only the name of S-CSCF, said determining the S-CSCF that has the capability to serve the UE for I-CSCF further comprises: the I-CSCF using the S-CSCF in the returned information as the S-CSCF that has the capability to serve the user;
if the information returned from the HSS comprises only the S-CSCF capability information set that has the capability to meet the most strict service subscription requirement of the UE requesting registration, said determining the S-CSCF that has the capability to serve the UE for I-CSCF further comprises: the I-CSCF selecting a new S-CSCF that has the capability to meet the current service requirement of the UE according to the S-CSCF capability information set in the returned response message, and determining the newly-selected S-CSCF as the S-CSCF that has the capability to serve the UE;
if the information returned from the HSS comprises the name of S-CSCF and S-CSCF capability information set that has the capability to meet the most strict service subscription requirement of the UE requesting registration, said determining the S-CSCF that has the capability to serve the UE for I-CSCF further comprises: the I-CSCF verifying according to the returned name of S-CSCF whether the S-CSCF has the capability to meet the current service requirement of the UE, if yes, determining the returned S-CSCF is the S-CSCF that has the capability to serve the UE, otherwise, selecting a new S-CSCF that has the capability to meet the current service demand of the UE according to the S-CSCF capability information set in the response message, and determining the newly-selected S-CSCF is the S-CSCF that has the capability to serve the UE (205a).

5. The method according to Claim 2, after the HSS receives the request message for inquiring the information of S-CSCF from the I-CSCF, further comprising: deciding according to the user's subscription information and the policy of the operator that the UE is permitted to perform a registration request in the current network before subsequent steps are executed (204a).

6. The method according to Claim 2, wherein, when a Public User Identity performs registration for the first time,
the request message received by the HSS from the I-CSCF for inquiring the information of S-CSCF is carried by a Cx-Query message (203a); and said inquiry response message returned to the I-CSCF from the HSS further comprising the information needed for determining an S-CSCF is carried by a Cx-Query Resp message (204a); or,
the request message received by the HSS from the I-CSCF for inquiring the information of S-CSCF is carried by a Cx-Select-pull message (203a); said inquiry response message returned to the I-CSCF from the HSS further comprising the information needed for determining an S-CSCF is carried by a Cx-Select-pull Resp message (204a).

7. The method according to Claim 2, wherein, when the UE is in a session,
if the HSS has stored the name of the S-CSCF that has served or is serving the UE, the HSS will, according to system configuration, return to the I-CSCF a response message comprising the name of the S-CSCF, and the I-CSCF will forward the session request message of the UE to the S-CSCF; or the HSS will return to the I-CSCF a response message comprising the information of the name of the S-CSCF and the S-CSCF capability information set that has the capability to meet the most strict service subscription requirement of the UE, and the I-CSCF will determine an S-CSCF that has the capability to serve the user and forward the session request message of the UE to the determined S-CSCF;
if there is no S-CSCF stored in the HSS that has served the UE, the HSS will directly return to the I-CSCF a response message comprising the S-CSCF capability information set that has the capability to meet the most strict service subscription requirements of the UE before the I-CSCF determines an S-CSCF that has the capability to serve the UE and forward the session request message of the user to the determined S-CSCF (403a).

8. The method according to Claim 2, wherein, when the UE is in a session,
the request message received by the HSS from the I-CSCF for inquiring about the information of S-CSCF is carried by a Cx-Location-Query message (402a); and said inquiry response message returned to I-CSCF from HSS further comprising the information needed for determining an S-CSCF is carried by a Cx-Location-Query Resp message (403a); or,
the request message received by the HSS from the I-CSCF for inquiring about the information of S-CSCF is carried by a Cx-Select-Pull message (402a); and said inquiry response message returned to the I-CSCF from the HSS further comprising the information needed for determining an S-CSCF is carried by a Cx-Select-Pull Resp message (403a).

9. The method according to Claim 1, wherein,
the message comprising the request for storing the name of the S-CSCF and for downloading the user's subscription information is carried by a Cx-Put- message (206a), and said response message returned to S-CSCF by HSS is carried by a Cx-Put Resp message (207a); or,
the message comprising the request for storing the name of the S-CSCF and for downloading the user's subscription information is carried by a Cx-Pull message (206a), and said response message returned to the S-CSCF by the HSS is carried by a Cx-Pull Resp message (207a).

10. The method according to Claim 1, wherein said user's subscription information in the response message returned to the S-CSCF comprises at least the user profile information (209).

11. A method for reducing the load of a Home Subscription Server, HSS's, interface, comprising:
sending one message for inquiring about the information of a Serving Call Session Control Function (S-CSCF) (402a), from an Interrogating Call Session Control Function, I-CSCF, to a HSS;
if the HSS has stored a name of an S-CSCF that has served or is serving a User Equipment, UE, requesting registration, the HSS returning to the I-CSCF an inquiry response message comprising the name of the S-CSCF or comprising the name of the S-CSCF and an S-CSCF capability information set that has the capability to meet the most strict service subscription requirement of the UE requesting registration;
or, if there is no assigned S-CSCF that has served or is serving the UE stored in the HSS, the HSS returning to the I-CSCF an inquiry response message comprising an S-CSCF capability information set that has the capability to meet the most strict service subscription requirement of the UE requesting registration;
the I-CSCF determining a S-CSCF that has the capability to serve a UE (404a) based on the inquiry response message and forwarding a request message of the UE to the determined S-CSCF (405a).

12. The method according to Claim 11, wherein, when a Public User Identity performs registration for the first time,
if there is at least one Public User Identity of the UE requesting registration that has been registered in the HSS and the registration is still valid, and the HSS determines there is no need for the I-CSCF to re-select an S-CSCF to serve the UE, then said information needed for determining an S-CSCF comprises the name of the S-CSCF that is serving the UE;
if there is at least one Public User Identity of the UE requesting registration of which the registration status is unregistered or the registration has expired, but the HSS still stores the name of the S-CSCF that was used by the UE last time, or if the UE has been assigned an S-CSCF by the HSS as an unregistered party that is called, then said information needed for determining an S-CSCF comprises the name of the S-CSCF that has served the UE;
if HSS has stored the name of the S-CSCF that has served or is serving the UE and the HSS is not sure whether it is needed for the I-CSCF to re-select an S-CSCF to serve the UE, then said information needed for determining an S-CSCF comprises the name of the S-CSCF that has served or is serving the UE and the S-CSCF capability information set that has the capability to meet the most strict service subscription requirement of the UE requesting registration;
if there is no assigned S-CSCF that has served the UE stored in the HSS, then said information needed for determining an S-CSCF comprises the S-CSCF capability information set that has the capability to meet the most strict service subscription requirement of the UE requesting registration (204a).

13. The method according to Claim 12, wherein,
if the information returned from the HSS comprises only the name of S-CSCF, said determining the S-CSCF that has the capability to serve the UE for I-CSCF further comprises: the I-CSCF determining the S-CSCF in the returned information is the S-CSCF that has the capability to serve the UE;
if the information returned from the HSS comprises only the S-CSCF capability information set that has the capability to meet the most strict service subscription requirement of the UE requesting registration, then said determining the S-CSCF that has the capability to serve the UE for I-CSCF further comprises: the I-CSCF selecting a new S-CSCF that has the capability to meet the current service requirement of the UE according to the S-CSCF capability information set in the returned response message, and determining the newly-selected S-CSCF as the S-CSCF that has the capability to serve the UE;
if the information returned from the HSS comprises the name of S-CSCF and S-CSCF capability information set that has the capability to meet the most strict service subscription requirement of the UE requesting registration, then said determining the S-CSCF that has the capability to serve the UE for I-CSCF further comprises: the I-CSCF deciding according to the returned name of S-CSCF whether the S-CSCF has the capability to meet the current service requirement of the UE, if yes, determining the S-CSCF in the returned information is the S-CSCF that has the capability to serve the UE, otherwise, selecting a new S-CSCF that has the capability to meet the current service requirement of the UE according to the S-CSCF capability information set in the response message, and determining the newly-selected S-CSCF as the S-CSCF that has the capability to serve the user (205a).

14. The method according to Claim 11, after the HSS receives the message for inquiring about the information of S-CSCF from the I-CSCF, further comprising:
deciding according to the user's subscription information and the policy of the operator that the UE is permitted to perform a registration request in the current network before subsequent steps is executed (204a).

15. The method according to Claim 11, wherein, when a public user identifier performs registration for the first time,
the message received by the HSS from the I-CSCF for inquiring about the information of S-CSCF is carried by a Cx-Query message (203a); and said inquiry response message returned to the I-CSCF from the HSS comprising the information needed for determining an S-CSCF is carried by a Cx-Query Resp message (204a); or,
the message received by the HSS from the I-CSCF for inquiring about the information of S-CSCF is carried by a Cx-Select-Pull message (203a), and said inquiry response message returned to the I-CSCF from the HSS comprising the information needed for determining an S-CSCF is carried by a Cx-Select-Pull Resp message (204a).

16. The method according to Claim 11, wherein, when the UE is in a session,
if the HSS has stored the name of the S-CSCF that has served or is serving the UE, the HSS will, according to system configuration, return to the I-CSCF a response message comprising the name of S-CSCF, and the I-CSCF will forward the session request message of the UE to the S-CSCF; or the HSS will return to the I-CSCF a response message comprising the S-CSCF name and S-CSCF capability information set that has the capability to meet the most strict service subscription requirement of the UE, and the I-CSCF will determine an S-CSCF that has the capability to serve the user and forward the session request message of the UE to the determined S-CSCF;
if there is no S-CSCF stored in the HSS that has served the UE, the HSS will directly return to I-CSCF a response message comprising the S-CSCF capability information set that has the capability to meet the most strict service subscription requirement of the UE before I-CSCF determines an S-CSCF that has the capability to serve the UE and forward the session request message of the UE to the determined S-CSCF (403a).

17. The method according to Claim 11, wherein, when the UE is in a session,
the message received by the HSS from the I-CSCF for inquiring about the information of S-CSCF is carried by a Cx-Location-Query message (402a), and said inquiry response message returned to the I-CSCF from the HSS comprising the information needed for determining an S-CSCF is carried by a Cx-Location-Query Resp message (403a); or,
the message received by the HSS from the I-CSCF for inquiring about the information of S-CSCF is carried by a Cx-Select-Pull message (402a), and said inquiry response message returned to the I-CSCF from the HSS comprising the information needed for determining an S-CSCF is carried by a Cx-Select-Pull Resp message (403 a).

18. A Home Subscriber Server, HSS, configured to:
receive one message comprising a request for storing the name of the S-CSCF and for downloading user's subscription information, from the HSS to the S-CSCF;
and store the name of the S-CSCF which sent the message, and return to the S-CSCF a response message comprising the user's subscription information, upon the first unit receiving the message.

19. A Home Subscriber Server,HSS, configured to:
receive one message for inquiring about information of a Serving Call Session Control Function, S-CSCF, from an Interrogating Call Session Control Function, I-CSCF;
and return to the I-CSCF, if the HSS has stored a name of an S-CSCF that has served or is serving a User Equipment, UE, requesting registration, an inquiry response message comprising the name of the S-CSCF or comprising the name of the S-CSCF and an S-CSCF capability information set that has the capability to meet the most strict service subscription requirement of the UE requesting registration; or, return to the I-CSCF, if there is no assigned S-CSCF that has served or is serving the UE stored in the HSS, an inquiry response message comprising an S-CSCF capability information set that has the capability to meet the most strict service subscription requirement of the UE requesting registration.

## Patentansprüche

1. Verfahren zum Reduzieren der Belastung einer Schnittstelle eines Heimteilnehmer-Servers, HSS-Schnittstelle, das Folgendes umfasst:
eine Server-Anrufsitzungssteuerfunktion, S-CSCF, sendet eine Nachricht zu einem HSS, wobei die Nachricht eine Anforderung zum Speichern des Namens der S-CSCF bei dem HSS und zum Herunterladen von Anwender-Teilnehmerinformationen von dem HSS zu der S-CSCF enthält (206a);
der HSS speichert den Namen der S-CSCF, die die Nachricht gesendet hat, und leitet eine Antwortnachricht, die die Anwender-Teilnehmerinformationen enthält, zu der S-CSCF zurück (207a).

2. Verfahren nach Anspruch 1, das ferner Folgendes umfasst: bei Empfang einer Anforderungsnachricht von einer Interrogations-Anrufsitzungssteuerfunktion, I-CSCF, zum Abfragen der Informationen der S-CSCF (203a) leitet der HSS eine Abfrageantwortnachricht, die die für die Bestimmung einer S-CSCF erforderlichen Informationen enthält, zu der I-CSCF zurück (204a); entsprechend der zurückgeleiteten Informationen in der Antwortnachricht bestimmt die I-CSCF die S-CSCF, die die Fähigkeit besitzt, ein Anwendergerät, UE, zu bedienen, und leitet die Anforderungsnachricht des UE zu der bestimmten S-CSCF weiter (205a).

3. Verfahren nach Anspruch 2, wobei dann, wenn eine öffentliche Anwenderkennung erstmals eine Registrierung ausführt,
falls wenigstens eine öffentliche Anwenderkennung des UE, das eine Registrierung anfordert, die in dem HSS registriert worden ist, vorhanden ist und die Registrierung noch gültig ist und falls der HSS entscheidet, dass kein Bedarf besteht, dass die I-CSCF erneut eine S-CSCF wählt, um das UE zu bedienen, die Informationen, die für die Bestimmung der S-CSCF notwendig sind, den Namen der S-CSCF enthalten, die das UE bedient;
falls wenigstens eine öffentliche Anwenderkennung für das UE, dessen Registrierungsstatus nicht registriert ist oder dessen Registrierung abgelaufen ist, vorhanden ist, jedoch der HSS noch immer den Namen der S-CSCF speichert, die von dem UE zuletzt verwendet worden ist, oder falls dem UE eine S-CSCF durch den HSS als ein nicht registrierter Teilnehmer, der angerufen wird, zugewiesen worden ist, die Informationen, die für die Bestimmung der S-CSCF notwendig sind, den Namen der S-CSCF enthalten, die das UE bedient hat;
falls der HSS den Namen der S-CSCF, die das UE bedient hat, gespeichert hat und der HSS nicht sicher ist, ob es notwendig ist, dass die I-CSCF eine S-CSCF erneut wählt, um das UE zu bedienen, die Informationen, die für die Bestimmung einer S-CSCF notwendig sind, den Namen der S-CSCF, die das UE bedient hat, und die S-CSCF-Fähigkeitsinformationsmenge, die die Fähigkeit besitzt, die strengste Dienstteilnehmeranforderung des UE, das eine Registrierung anfordert, zu erfüllen, enthalten;
falls der HSS den Namen der zugewiesenen S-CSCF, die das UE bedient hat, nicht speichert, die Informationen, die für die Bestimmung einer S-CSCF notwendig sind, die S-CSCF-Fähigkeitsinformationsmenge enthalten, die die Fähigkeit besitzt, die strengste Dienstteilnehmeranforderung des UE, das eine Registrierung anfordert, zu erfüllen (204a).

4. Verfahren nach Anspruch 3, wobei,
falls die von dem HSS zurückgeleiteten Informationen nur den Namen der S-CSCF enthalten, das Bestimmen der S-CSCF, die die Fähigkeit besitzt, das UE für die I-CSCF zu bedienen, ferner Folgendes umfasst: die I-CSCF verwendet die S-CSCF in den zurückgeleiteten Informationen als die S-CSCF, die die Fähigkeit besitzt, den Anwender zu bedienen;
falls die von dem HSS zurückgeleiteten Informationen nur die S-CSCF-Fähigkeitsinformationsmenge enthalten, die die Fähigkeit besitzt, die strengste Dienstteilnehmeranforderung des UE, das eine Registrierung anfordert, zu erfüllen, das Bestimmen der S-CSCF, die die Fähigkeit besitzt, das UE für die I-CSCF zu bedienen, ferner Folgendes umfasst: die I-CSCF wählt eine neue S-CSCF aus, die die Fähigkeit besitzt, die momentane Dienstanforderung für das UE in Übereinstimmung mit der S-CSCF-Fähigkeitsinformationsmenge in der zurückgeleiteten Antwortnachricht zu erfüllen, und bestimmt die neu gewählte S-CSCF als die S-CSCF, die die Fähigkeit besitzt, das UE zu bedienen;
falls die von dem HSS zurückgeleiteten Informationen den Namen der S-CSCF und die S-CSCF-Fähigkeitsinformationsmenge, die die Fähigkeit besitzt, die strengste Dienstteilnehmeranforderung des UE, das eine Registrierung anfordert, zu erfüllen, enthalten, das Bestimmen der S-CSCF, die die Fähigkeit besitzt, das UE für die I-CSCF zu bedienen, ferner Folgendes umfasst: die I-CSCF verifiziert in Übereinstimmung mit dem zurückgeleiteten Namen der S-CSCF, ob die S-CSCF die Fähigkeit besitzt, die momentane Dienstanforderung des UE zu erfüllen, und wenn ja, bestimmt sie die zurückgeleitete S-CSCF als die S-CSCF, die die Fähigkeit besitzt, das UE zu bedienen, andernfalls wählt sie eine neue S-CSCF, die die Fähigkeit besitzt, die momentane Dienstanforderung des UE zu erfüllen, in Übereinstimmung mit der S-CSCF-Fähigkeitsinformationsmenge in der Antwortnachricht aus und bestimmt die neu gewählte S-CSCF als die S-CSCF, die die Fähigkeit besitzt, das UE zu bedienen (205a).

5. Verfahren nach Anspruch 2, das, nachdem der HSS die Anforderungsnachricht zum Abfragen der Informationen der S-CSCF von der I-CSCF empfangen hat, ferner Folgendes umfasst:
Entscheiden in Übereinstimmung mit den Anwender-Teilnehmerinformationen und der Strategie der Bedienungsperson, dass das UE eine Registrierungsanforderung im momentanen Netz ausführen darf, bevor nachfolgende Schritte ausgeführt werden (204a).

6. Verfahren nach Anspruch 2, wobei dann, wenn eine öffentliche Anwenderkennung erstmals eine Registrierung ausführt,
die Anforderungsnachricht, die durch den HSS von der I-CSCF empfangen wird, um die Informationen der S-CSCF abzufragen, durch eine Cx-Abfragenachricht (203a) transportiert wird; und die Abfrageantwortnachricht, die von dem HSS zu der I-CSCF zurückgeleitet wird und ferner die Informationen enthält, die für die Bestimmung einer S-CSCF notwendig sind, durch eine Cx-Abfrageantwortnachricht transportiert wird (204a); oder
die Anforderungsnachricht, die durch den HSS von der I-CSCF empfangen wird, um die Informationen der S-CSCF abzufragen, durch eine Cx-Auswahlabfragenachricht (203a) transportiert wird; und die Abfrageantwortnachricht, die von dem HSS zu der I-CSCF zurückgeleitet wird und ferner die Informationen enthält, die für die Bestimmung einer S-CSCF notwendig sind, durch eine Cx-Auswahlabfrageantwortnachricht transportiert wird (204a).

7. Verfahren nach Anspruch 2, wobei dann, wenn sich das UE in einer Sitzung befindet, falls der HSS den Namen der S-CSCF gespeichert hat, die das UE bedient hat oder bedient, der HSS in Übereinstimmung mit einer Systemkonfiguration zu der I-CSCF eine Antwortnachricht zurückleitet, die den Namen der S-CSCF enthält, und die I-CSCF die Sitzungsanforderungsnachricht des UE zu der S-CSCF weiterleitet; oder der HSS zu der I-CSCF eine Antwortnachricht zurückleitet, die die Informationen des Namens der S-CSCF und die S-CSCF-Fähigkeitsinformationsmenge, die die Fähigkeit besitzt, die strengste Dienstteilnehmeranforderung des UE zu erfüllen, enthält, und die I-CSCF eine S-CSCF bestimmt, die die Fähigkeit besitzt, den Anwender zu bedienen, und die Sitzungsanforderungsnachricht des UE zu der bestimmten S-CSCF weiterleitet;
falls in dem HSS, der das UE bedient hat, keine S-CSCF gespeichert ist, der HSS zu der I-CSCF direkt eine Antwortnachricht zurückleitet, die die S-CSCF-Fähigkeitsinformationsmenge enthält, die die Fähigkeit besitzt, die strengsten Dienstteilnehmeranforderungen des UE zu erfüllen, bevor die I-CSCF eine S-CSCF bestimmt, die die Fähigkeit besitzt, das UE zu bedienen, und die Sitzungsanforderungsnachricht des Anwenders zu der bestimmten S-CSCF weiterleitet (403a).

8. Verfahren nach Anspruch 2, wobei dann, wenn sich das UE in einer Sitzung befindet, die Anforderungsnachricht, die durch den HSS von der I-CSCF empfangen wird, um die Informationen einer S-CSCF abzufragen, durch eine Cx-Ortsabfragenachricht transportiert wird (402a); und die Abfrageantwortnachricht, die von dem HSS zu der I-CSCF zurückgeleitet wird und ferner die Informationen enthält, die für die Bestimmung einer S-CSCF notwendig sind, durch eine Cx-Ortsabfrageantwortnachricht transportiert wird (403a); oder
die Anforderungsnachricht, die durch den HSS von der I-CSCF empfangen wird, um die Informationen der S-CSCF abzufragen, durch eine Cx-Auswahlabfragenachricht transportiert wird (402a); und die Abfrageantwortnachricht, die von dem HSS zu der I-CSCF zurückgeleitet wird und ferner die Informationen enthält, die für die Bestimmung einer S-CSCF notwendig sind, durch eine Cx-Auswahlabfrageantwortnachricht transportiert wird (403a).

9. Verfahren nach Anspruch 1, wobei
die Nachricht, die die Anforderung zum Speichern des Namens der S-CSCF und zum Herunterladen der Anwender-Teilnehmerinformationen enthält, durch eine Cx-Setznachricht transportiert wird (206a) und die Antwortnachricht, die durch den HSS zu der S-CSCF zurückgeleitet wird, durch eine Cx-Setzantwortnachricht transportiert wird (207a); oder
die Nachricht, die die Anforderung zum Speichern des Namens der S-CSCF und zum Herunterladen der Anwender-Teilnehmerinformationen enthält, durch eine Cx-Abfragenachricht transportiert wird (206a) und die Antwortnachricht, die durch den HSS zu der S-CSCF zurückgeleitet wird, durch eine Cx-Abfrageantwortnachricht transportiert wird (207a).

10. Verfahren nach Anspruch 1, wobei die Anwender-Teilnehmerinformationen in der Antwortnachricht, die zu der S-CSCF zurückgeleitet wird, wenigstens die Anwenderprofilinformationen (209) enthalten.

11. Verfahren zum Reduzieren der Belastung einer Schnittstelle eines Heimteilnehmer-Servers, HSS-Schnittstelle, das Folgendes umfasst:
Senden einer Nachricht zum Abfragen der Informationen einer Server-Anrufsitzungssteuerfunktion (S-CSCF) (402a) von einer Interrogations-Anrufsitzungssteuerfunktion, I-CSCF, zu einem HSS;
falls der HSS einen Namen einer S-CSCF gespeichert hat, die ein Anwendergerät, UE, das eine Registrierung anfordert, bedient hat oder bedient, leitet der HSS eine Abfrageantwortnachricht, die den Namen der S-CSCF enthält oder den Namen der S-CSCF und eine S-CSCF-Fähigkeitsinformationsmenge enthält, die die Fähigkeit besitzt, die strengste Dienstteilnehmeranforderung des UE, das eine Registrierung anfordert, zu erfüllen, zu der I-CSCF zurück;
oder falls keine zugewiesene S-CSCF vorhanden ist, die das UE bedient hat oder bedient und in dem HSS gespeichert ist, leitet der HSS eine Abfrageantwortnachricht, die eine S-CSCF-Fähigkeitsinformationsmenge enthält, die die Fähigkeit besitzt, die strengste Dienstteilnehmeranforderung des UE, das eine Registrierung anfordert, zu erfüllen, zu der I-CSCF zurück;
die I-CSCF bestimmt eine S-CSCF, die die Fähigkeit besitzt, ein UE zu bedienen (404a), anhand der Abfrageantwortnachricht und leitet eine Anforderungsnachricht des UE zu der bestimmten S-CSCF zurück (405a).

12. Verfahren nach Anspruch 11, wobei dann, wenn eine öffentliche Anwenderkennung erstmals eine Registrierung ausführt,
falls wenigstens eine öffentliche Anwenderkennung des UE, das eine Registrierung anfordert, die in dem HSS registriert worden ist, vorhanden ist und wenn die Registrierung noch gültig ist und falls der HSS bestimmt, dass kein Bedarf besteht, dass die I-CSCF erneut eine S-CSCF wählt, um das UE zu bedienen, die Informationen, die für die Bestimmung einer S-CSCF notwendig sind, den Namen der S-CSCF enthalten, die das UE bedient;
falls wenigstens eine öffentliche Anwenderkennung des UE, das eine Registrierung anfordert und dessen Registrierungsstatus nicht registriert ist oder dessen Registrierung abgelaufen ist, vorhanden ist, jedoch der HSS noch immer den Namen der S-CSCF speichert, die von dem UE zuletzt verwendet worden ist, oder falls dem UE eine S-CSCF durch den HSS als ein nicht registrierter Teilnehmer, der angerufen wird, zugewiesen worden ist, die Informationen, die für die Bestimmung einer S-CSCF notwendig sind, den Namen der S-CSCF enthalten, die das UE bedient hat;
falls der HSS den Namen der S-CSCF gespeichert hat, die das UE bedient hat oder bedient, und der HSS nicht sicher ist, ob es erforderlich ist, dass die I-CSCF eine S-CSCF erneut wählt, um das UE zu bedienen, die Informationen, die für die Bestimmung einer S-CSCF notwendig sind, den Namen der S-CSCF, die das UE bedient hat oder bedient, und die S-CSCF-Fähigkeitsinformationsmenge, die die Fähigkeit besitzt, die strengste Dienstteilnehmeranforderung des UE, das eine Registrierung anfordert, zu erfüllen, enthalten;
falls keine zugewiesene S-CSCF, die das UE bedient hat, in dem HSS gespeichert ist, die Informationen, die für die Bestimmung einer S-CSCF notwendig sind, die S-CSCF-Fähigkeitsinformationsmenge enthalten, die die Fähigkeit besitzt, die strengste Dienstteilnehmeranforderung des UE, das eine Registrierung anfordert, zu erfüllen (204a).

13. Verfahren nach Anspruch 12, wobei,
falls die von dem HSS zurückgeleiteten Informationen nur den Namen der S-CSCF enthalten, das Bestimmen der S-CSCF, die die Fähigkeit besitzt, das UE für die I-CSCF zu bedienen, ferner Folgendes umfasst: die I-CSCF bestimmt, dass die S-CSCF in den zurückgeleiteten Informationen die S-CSCF ist, die die Fähigkeit besitzt, das UE zu bedienen;
falls die von dem HSS zurückgeleiteten Informationen nur die S-CSCF-Fähigkeitsinformationsmenge enthalten, die die Fähigkeit besitzt, die strengste Dienstteilnehmeranforderung des UE, das eine Registrierung anfordert, zu erfüllen, das Bestimmen der S-CSCF, die die Fähigkeit besitzt, das UE für die I-CSCF zu bedienen, ferner Folgendes umfasst: die I-CSCF wählt eine neue S-CSCF aus, die die Fähigkeit besitzt, die momentane Dienstanforderung für das UE in Übereinstimmung mit der S-CSCF-Fähigkeitsinformationsmenge in der zurückgeleiteten Antwortnachricht zu erfüllen, und bestimmt die neu gewählte S-CSCF als die S-CSCF, die die Fähigkeit besitzt, das UE zu bedienen;
falls die von dem HSS zurückgeleiteten Informationen den Namen der S-CSCF und die S-CSCF-Fähigkeitsinformationsmenge, die die Fähigkeit besitzt, die strengste Dienstteilnehmeranforderung des UE, das eine Registrierung anfordert, zu erfüllen, enthalten, das Bestimmen der S-CSCF, die die Fähigkeit besitzt, das UE für die I-CSCF zu bedienen, ferner Folgendes umfasst: die I-CSCF entscheidet in Übereinstimmung mit dem zurückgeleiteten Namen der S-CSCF, ob die S-CSCF die Fähigkeit besitzt, die momentane Dienstanforderung des UE zu erfüllen, und wenn ja, bestimmt sie die S-CSCF in den zurückgeleiteten Informationen als die S-CSCF, die die Fähigkeit besitzt, das UE zu bedienen, andernfalls wählt sie eine neue S-CSCF, die die Fähigkeit besitzt, die momentane Dienstanforderung des UE zu erfüllen, in Übereinstimmung mit der S-CSCF-Fähigkeitsinformationsmenge in der Antwortnachricht aus und bestimmt die neu gewählte S-CSCF als die S-CSCF, die die Fähigkeit besitzt, den Anwender zu bedienen (205a).

14. Verfahren nach Anspruch 11, das, nachdem der HSS die Nachricht zum Abfragen der Informationen der S-CSCF von der I-CSCF empfangen hat, ferner Folgendes umfasst: Entscheiden in Übereinstimmung mit den Anwender-Teilnehmerinformationen und der Strategie der Bedienungsperson, dass das UE eine Registrierungsanforderung in dem momentanen Netz ausführen darf, bevor nachfolgende Schritte ausgeführt werden (204a).

15. Verfahren nach Anspruch 11, wobei dann, wenn eine öffentliche Anwenderkennung erstmals eine Registrierung ausführt,
die Nachricht, die durch den HSS von der I-CSCF empfangen wird, um die Informationen der S-CSCF abzufragen, durch eine Cx-Abfragenachricht transportiert wird (203a); und die Abfrageantwortnachricht, die von dem HSS zu der I-CSCF zurückgeleitet wird und Informationen enthält, die für die Bestimmung einer S-CSCF notwendig sind, durch eine Cx-Abfrageantwortnachricht transportiert wird (204a);
oder
die Nachricht, die durch den HSS von der I-CSCF empfangen wird, um die Informationen der S-CSCF abzufragen, durch eine Cx-Auswahlabfragenachricht transportiert wird (203a) und die Abfrageantwortnachricht, die von dem HSS zu der I-CSCF zurückgeleitet wird und Informationen enthält, die für die Bestimmung einer S-CSCF notwendig sind, durch eine Cx-Auswahlabfrageantwortnachricht transportiert wird (204a).

16. Verfahren nach Anspruch 11, wobei dann, wenn sich das UE in einer Sitzung befindet,
falls der HSS den Namen der S-CSCF gespeichert hat, die das UE bedient hat oder bedient, der HSS in Übereinstimmung mit einer Systemkonfiguration zu der I-CSCF eine Antwortnachricht zurückleitet, die den Namen der S-CSCF enthält, und die I-CSCF die Sitzungsanforderungsnachricht des UE zu der S-CSCF weiterleitet; oder der HSS zu der I-CSCF eine Antwortnachricht zurückleitet, die den S-CSCF-Namen und eine S-CSCF-Fähigkeitsinformationsmenge, die die Fähigkeit besitzt, die strengste Dienstteilnehmeranforderung des UE zu erfüllen, enthält, und die I-CSCF eine S-CSCF bestimmt, die die Fähigkeit besitzt, den Anwender zu bedienen, und die Sitzungsanforderungsnachricht des UE zu der bestimmten S-CSCF weiterleitet;
falls in dem HSS der das UE bedient hat, keine S-CSCF gespeichert ist, der HSS zu einer I-CSCF direkt eine Antwortnachricht zurückleitet, die die S-CSCF-Fähigkeitsinformationsmenge enthält, die die Fähigkeit besitzt, die strengste Dienstteilnehmeranforderung des UE zu erfüllen, bevor die I-CSCF eine S-CSCF bestimmt, die die Fähigkeit besitzt, das UE zu bedienen, und die Sitzungsanforderungsnachricht des UE zu der bestimmten S-CSCF weiterleitet (403a).

17. Verfahren nach Anspruch 11, wobei dann, wenn sich das UE in einer Sitzung befindet,
die Nachricht, die durch den HSS von der I-CSCF empfangen wird, um die Informationen des S-CSCF abzufragen, durch eine Cx-Ortsabfragenachricht transportiert wird (402a) und die Abfrageantwortnachricht, die von dem HSS zu der I-CSCF zurückgeleitet wird und die Informationen enthält, die für die Bestimmung einer S-CSCF notwendig sind, durch eine Cx-Ortsabfrageantwortnachricht transportiert wird (403a); oder
die Nachricht, die durch den HSS von der I-CSCF empfangen wird, um die Informationen der S-CSCF abzufragen, durch eine Cx-Auswahlabfragenachricht transportiert wird (402a) und die Abfrageantwortnachricht, die von dem HSS zu der I-CSCF zurückgeleitet wird und die Informationen enthält, die für die Bestimmung einer S-CSCF notwendig sind, durch eine Cx-Auswahlabfrageantwortnachricht transportiert wird (403a).

18. Heimteilnehmer-Server, HSS, der konfiguriert ist:
eine Nachricht von einer Server-Anrufsitzungssteuerfunktion, S-CSCF, zu empfangen, wobei die Nachricht eine Anforderung zum Speichern des Namens der S-CSCF und zum Herunterladen von Anwender-Teilnehmerinformationen von dem HSS zu der S-CSCF umfasst;
und den Namen der S-CSCF, die die Nachricht gesendet hat, zu speichern und zu der S-CSCF eine Antwortnachricht zurückzuleiten, die die Anwender-Teilnehmerinformationen umfasst, wenn die erste Einheit die Nachricht empfängt.

19. Heimteilnehmer-Server, HSS, der konfiguriert ist:
eine Nachricht zum Abfragen von Informationen einer Server-Anrufsitzungssteuerfunktion, S-CSCF, von einer Interrogations-Anrufsitzungssteuerfunktion, I-CSCF, zu empfangen;
und falls der HSS einen Namen einer S-CSCF gespeichert hat, die ein Anwendergerät, UE, das eine Registrierung anfordert, bedient hat oder bedient, zu der I-CSCF eine Abfrageantwortnachricht zurückzuleiten, die den Namen der S-CSCF enthält oder den Namen der S-CSCF und eine S-CSCF-Fähigkeitsinformationsmenge, die die Fähigkeit besitzt, die strengste Dienstteilnehmeranforderung des UE, das eine Registrierung anfordert, zu erfüllen, enthält; oder falls keine zugewiesene S-CSCF, die das UE bedient hat oder bedient,
in dem HSS gespeichert ist, eine Abfrageantwortnachricht, die eine S-CSCF-Fähigkeitsinformationsmenge enthält, die die Fähigkeit besitzt, die strengste Dienstteilnehmeranforderung des UE, das eine Registrierung anfordert, zu erfüllen, zu der I-CSCF zurückzuleiten.

## Revendications

1. Procédé de réduction de la charge d'une interface de Serveur d'Abonnés de Rattachement, HSS, comprenant :
l'envoi, par une Fonction de Commande de Session d'Appel de Desserte, S-CSCF,
d'un message à un HSS, le message comprenant une requête de mémorisation du nom de la S-CSCF au niveau du HSS et de téléchargement des informations d'abonnement de l'usager depuis le HSS vers la S-CSCF (206a) ;
la mémorisation par le HSS du nom de la S-CSCF qui a envoyé le message et le renvoi à la S-CSCF d'un message de réponse comprenant les informations d'abonnement de l'usager (207a).

2. Procédé selon la revendication 1, comprenant en outre : à la réception d'un message de requête depuis une Fonction de Commande de Session d'Appel d'Interrogation, I-CSCF, pour solliciter les informations de la S-CSCF (203a), le renvoi par le HSS à la I-CSCF d'un message de réponse de sollicitation comprenant les informations nécessaires pour déterminer une S-CSCF (204a) ; en fonction des informations renvoyées dans le message de réponse, la détermination par la I-CSCF de la S-CSCF qui a la capabilité de desservir un Equipement Utilisateur, UE, et la transmission du message de requête de l'UE à la S-CSCF déterminée (205a).

3. Procédé selon la revendication 2, dans lequel, quand une Identité d'Utilisateur Public procède à un enregistrement pour la première fois,
s'il existe au moins une Identité d'Utilisateur Public de l'UE requérant l'enregistrement qui a été enregistrée dans le HSS et si l'enregistrement est toujours valable, et si le HSS décide que la I-CSCF n'a pas besoin de resélectionner une S-CSCF pour desservir l'UE, lesdites informations nécessaires pour déterminer la S-CSCF comprennent le nom de la S-CSCF qui dessert l'UE ;
s'il existe au moins une Identité d'Utilisateur Public de l'UE dont l'état d'enregistrement est non enregistrée ou dont l'enregistrement a expiré mais le HSS a toujours en mémoire le nom de la S-CSCF qui a été utilisée la dernière fois par l'UE, ou si l'UE s'est vu assigner une S-CSCF par le HSS comme correspondant non enregistré appelé, lesdites informations nécessaires pour déterminer la S-CSCF comprennent le nom de la S-CSCF qui a desservi l'UE ;
si le HSS a mémorisé le nom de la S-CSCF qui a desservi l'UE et le HSS n'est pas sûr si la I-CSCF doit ou non resélectionner une S-CSCF pour desservir l'UE, lesdites informations nécessaires pour déterminer une S-CSCF comprennent le nom de la S-CSCF qui a desservi l'UE et l'ensemble d'informations de capabilité de S-CSCF qui a la capabilité de satisfaire l'exigence la plus stricte d'abonnement au service de l'UE requérant l'enregistrement ;
si le HSS ne mémorise pas le nom de la S-CSCF assignée qui a desservi l'UE, lesdites informations nécessaires pour déterminer une S-CSCF comprennent alors l'ensemble d'informations de capabilité de S-CSCF qui a la capabilité de satisfaire l'exigence la plus stricte d'abonnement au service de l'UE requérant l'enregistrement (204a).

4. Procédé selon la revendication 3, dans lequel,
si les informations renvoyées par le HSS comprennent uniquement le nom de la S-CSCF, ladite détermination de la S-CSCF qui a la capabilité de desservir l'UE pour la I-CSCF comprend en outre : l'utilisation par la I-CSCF de la S-CSCF dans les informations renvoyées en tant que S-CSCF ayant la capabilité de desservir l'usager ;
si les informations renvoyées par le HSS comprennent uniquement l'ensemble d'informations de capabilité de S-CSCF qui a la capabilité de satisfaire l'exigence la plus stricte d'abonnement au service de l'UE requérant l'enregistrement, ladite détermination de la S-CSCF qui a la capabilité de desservir l'UE pour la I-CSCG comprend en outre : la sélection par la I-CSCF d'un nouvelle S-CSCF qui a la capabilité de satisfaire l'exigence de service courante de l'UE en fonction de l'ensemble d'informations de capabilité de S-CSCF dans le message de réponse renvoyé, et la détermination de la S-CSCF nouvellement sélectionnée en tant que S-CSCF ayant la capabilité de desservir l'UE ;
si les informations renvoyées par le HSS comprennent le nom de la S-CSCF et l'ensemble d'informations de capabilité de S-CSCF qui a la capabilité de satisfaire l'exigence la plus stricte d'abonnement au service de l'UE requérant l'enregistrement, ladite détermination de la S-CSCF qui a la capabilité de desservir l'UE pour la I-CSCF comprend en outre : la vérification par la I-CSCF en fonction du nom de la S-CSCF renvoyé si la S-CSCF a ou non la capabilité de satisfaire l'exigence de service courante de l'UE, dans l'affirmative, la détermination que la S-CSCF renvoyée est la S-CSCF qui a la capabilité de desservir l'UE, dans le cas contraire, la sélection d'une nouvelle S-CSCF qui a la capabilité de satisfaire l'exigence de service courante de l'UE en fonction de l'ensemble d'informations de capabilité de S-CSCF dans le message de réponse, et la détermination que la S-CSCF nouvellement sélectionnée est la S-CSCF ayant la capabilité de desservir l'UE (205a).

5. Procédé selon la revendication 2, comprenant en outre après que le HSS reçoit le message de requête pour solliciter les informations de la S-CSCF auprès de la I-CSCF : la décision en fonction des informations d'abonnement de l'usager et de la règle de l'opérateur selon laquelle l'UE est autorisé à exécuter une requête d'enregistrement dans le réseau courant avant l'exécution des étapes suivantes (204a).

6. Procédé selon la revendication 2, dans lequel, quand une Identité d'Utilisateur Public procède à un enregistrement pour la première fois,
le message de requête reçu par le HSS depuis la I-CSCF pour solliciter les informations de la S-CSCF est transporté par un message Cx-Query (203a) ; et ledit message de réponse de sollicitation renvoyé à la I-CSCF par le HSS comprenant en outre les informations nécessaires pour déterminer une S-CSCF est transporté par un message Cx-Query Resp (204a) ; ou
le message de requête reçu par le HSS depuis la I-CSCF pour solliciter les informations de la S-CSCF est transporté par un message Cx-Select-pull (203a) ; ledit message de réponse de sollicitation renvoyé à la I-CSCF par le HSS comprenant en outre des informations nécessaires pour déterminer une S-CSCF est transporté par un message Cx-Select-pull Resp (204a).

7. Procédé selon la revendication 2, dans lequel, quand l'UE est en session,
si le HSS a mémorisé le nom de la S-CSCF qui a desservi ou qui dessert l'UE, le HSS renvoie, en fonction de la configuration du système, à l'I-CSCF un message de réponse comprenant le nom de la S-CSCF, et la I-CSCF transmet le message de requête de session de l'UE à la S-CSCF ; ou le HSS renvoie à la I-CSCF un message de réponse comprenant les informations du nom de la S-CSCF et de l'ensemble d'informations de capabilité de S-CSCF qui a la capabilité de satisfaire l'exigence la plus stricte d'abonnement au service de l'UE, et la I-CSCF détermine une S-CSCF ayant la capabilité de desservir l'usager et transmet le message de requête de session de l'UE à la S-CSCF déterminée ;
si aucune S-CSCF ayant desservi l'UE n'est mémorisée dans le HSS, le HSS renvoie directement à la I-CSCF un message de réponse comprenant l'ensemble d'informations de capabilité de S-CSCF qui a la capabilité de satisfaire les exigences les plus strictes d'abonnement au service de l'UE avant que la I-CSCF détermine une S-CSCF ayant la capabilité de desservir l'UE et transmette le message de requête de session de l'utilisateur à la S-CSCF déterminée (403a).

8. Procédé selon la revendication 2, dans lequel quand l'UE est en session,
le message de requête reçu par le HSS depuis la I-CSCF pour solliciter les informations de la S-CSCF est transporté par un message Cx-Location-Query (402a) ; et ledit message de réponse de sollicitation renvoyé à la I-CSCF par le HSS comprenant en outre les informations nécessaires pour déterminer une S-CSCF est transporté par un message Cx-Location-Query Resp (403a) ; ou
le message de requête reçu par le HSS depuis la I-CSCF pour solliciter les informations de la S-CSCF est transporté par un message Cx-Select-pull (402a) ; et ledit message de réponse de sollicitation renvoyé à la I-CSCF par le HSS comprenant en outre des informations nécessaires pour déterminer une S-CSCF est transporté par un message Cx-Select-pull Resp (403a).

9. Procédé selon la revendication 1, dans lequel,
le message comprenant la requête de mémorisation du nom de la S-CSCF et de téléchargement des informations d'abonnement de l'usager est transporté par un message Cx-Put (206a) ; et ledit message de réponse renvoyé à la S-CSCF par le HSS est transporté par un message Cx-Put Resp (207a) ; ou
le message comprenant la requête de mémorisation du nom de la S-CSCF et de téléchargement des informations d'abonnement de l'usager est transporté par un message Cx-Pull (206a), et ledit message de réponse renvoyé à la S-CSCF par le HSS est transporté par un message Cx-Pull Resp (207a).

10. Procédé selon la revendication 1, dans lequel lesdites informations d'abonnement de l'usager dans le message de réponse renvoyé à la S-CSCF comprennent au moins les informations de profil d'utilisateur (209).

11. Procédé de réduction de la charge d'une interface de Serveur d'Abonnement de Rattachement, HSS, comprenant :
l'envoi d'un message pour solliciter les informations d'une Fonction de Commande de Session d'Appel de Desserte (S-CSCF) (402a), par une Fonction de Commande de Session d'Appel d'Interrogation, I-CSCF, à un HSS ;
si le HSS a mémorisé un nom d'une S-CSCF ayant desservi ou desservant un Equipement Utilisateur, UE, requérant l'enregistrement, le renvoi par le HSS à la I-CSCF d'un message de réponse de sollicitation comprenant le nom de la S-CSCF ou
comprenant le nom de la S-CSCF et un ensemble d'informations de capabilité de S-CSCF qui a la capabilité de satisfaire l'exigence la plus stricte d'abonnement au service de l'UE requérant l'enregistrement ;
ou, si aucune S-CSCF assignée ayant desservi ou desservant l'UE n'est mémorisée dans le HSS, le renvoi par le HSS à la I-CSCF d'un message de réponse de sollicitation comprenant un ensemble d'informations de capabilité de S-CSCF qui a la capabilité de satisfaire l'exigence la plus stricte d'abonnement au service de l'UE requérant l'enregistrement ;
la détermination par la I-CSCF d'une S-CSCF ayant la capabilité de desservir un UE (404a) en fonction du message de réponse de sollicitation et la transmission d'un message de requête de l'UE à la S-CSCF déterminée (405a).

12. Procédé selon la revendication 11, dans lequel, quand une Identité d'Utilisateur Public procède à un enregistrement pour la première fois,
s'il existe au moins une Identité d'Utilisateur Public de l'UE requérant l'enregistrement qui a été enregistrée dans le HSS et si l'enregistrement est toujours valable, et si le HSS détermine que la I-CSCF n'a pas besoin de resélectionner une S-CSCF pour desservir l'UE, lesdites informations nécessaires pour déterminer la S-CSCF comprennent alors le nom de la S-CSCF qui dessert l'UE ;
s'il existe au moins une Identité d'Utilisateur Public de l'UE requérant l'enregistrement dont l'état d'enregistrement est non enregistrée ou dont l'enregistrement a expiré, mais le HSS a toujours en mémoire le nom de la S-CSCF qui a été utilisé la dernière fois par l'UE, ou si l'UE s'est vu assigner une S-CSCF par le HSS comme correspondant non enregistré appelé, lesdites informations nécessaires pour déterminer le S-CSCF comprennent alors le nom de la S-CSCF qui a desservi l'UE ;
si le HSS a mémorisé le nom de la S-CSCF qui a desservi ou qui dessert l'UE et le HSS n'est pas sûr si la I-CSCF doit ou non resélectionner une S-CSCF pour desservir l'UE, lesdites informations nécessaires pour déterminer une S-CSCF comprennent alors le nom de la S-CSCF ayant desservi ou desservant l'UE et l'ensemble d'informations de capabilité de S-CSCF qui a la capabilité de satisfaire l'exigence la plus stricte d'abonnement au service de l'UE requérant l'enregistrement ;
si aucune S-CSCF assignée ayant desservi l'UE n'est mémorisée dans le HSS, lesdites informations nécessaires pour déterminer une S-CSCF comprennent alors l'ensemble d'informations de capabilité de S-CSCF qui a la capabilité de satisfaire l'exigence la plus stricte d'abonnement au service de l'UE requérant l'enregistrement (204a).

13. Procédé selon la revendication 12, dans lequel :
si les informations renvoyées par le HSS comprennent uniquement le nom de la S-CSCF, ladite détermination de la S-CSCF qui a la capabilité de desservir l'UE pour la I-CSCF comprend en outre : la détermination par la I-CSCF de la S-CSCF dans les informations renvoyées est la S-CSCF ayant la capabilité de desservir l'UE ;
si les informations renvoyées par le HSS comprennent uniquement l'ensemble d'informations de capabilité de S-CSCF qui a la capabilité de satisfaire l'exigence la plus stricte d'abonnement au service de l'UE requérant l'enregistrement, ladite détermination de la S-CSCF qui a la capabilité de desservir l'UE pour la I-CSCF comprend alors en outre : la sélection par la I-CSCF d'une nouvelle S-CSCF ayant la capabilité de satisfaire l'exigence de service courante de l'UE en fonction de l'ensemble d'informations de capabilité de S-CSCF dans le message de réponse renvoyé, et la détermination de la S-CSCF nouvellement sélectionnée en tant que S-CSCF ayant la capabilité de desservir l'UE ;
si les informations renvoyées par le HSS comprennent le nom de la S-CSCF et l'ensemble d'informations de capabilité de S-CSCF qui a la capabilité de satisfaire l'exigence la plus stricte d'abonnement au service de l'UE requérant l'enregistrement,
ladite détermination de la S-CSCF ayant la capabilité de desservir l'UE pour la I-CSCF comprend alors en outre : la décision par la I-CSCF en fonction du nom de la S-CSCF renvoyé si la S-CSCF a ou non la capabilité de satisfaire l'exigence de service courante de l'UE, dans l'affirmative, la détermination que la S-CSCF dans les informations renvoyées est la S-CSCF ayant la capabilité de desservir l'UE, dans le cas contraire, la sélection d'une nouvelle S-CSCF ayant la capabilité de satisfaire l'exigence de service courante de l'UE en fonction de l'ensemble d'informations de capabilité de S-CSCF dans le message de réponse, et la détermination de la S-CSCF nouvellement sélectionnée en tant que S-CSCF ayant la capabilité de desservir l'usager (205a).

14. Procédé selon la revendication 11, comprenant en outre après que le HSS reçoit le message de requête pour solliciter les informations de la S-CSCF auprès de la I-CSCF : la décision en fonction des informations d'abonnement de l'usager et de la règle de l'opérateur selon laquelle l'UE est autorisé à exécuter une requête d'enregistrement dans le réseau courant avant l'exécution des étapes suivantes (204a).

15. Procédé selon la revendication 11, dans lequel quand une Identité d'Utilisateur Public procède à un enregistrement pour la première fois,
le message reçu par le HSS depuis la I-CSCF pour solliciter les informations de la S-CSCF est transporté par un message Cx-Query (203a) ; et ledit message de réponse de sollicitation renvoyé à la I-CSCF par le HSS comprenant les informations nécessaires pour déterminer une S-CSCF est transporté par un message Cx-Query Resp (204a) ; ou
le message reçu par le HSS depuis la I-CSCF pour solliciter les informations de la S-CSCF est transporté par un message Cx -Select-Pull (203a), et l edit message de réponse de sollicitation renvoyé à la I-CSCF par le HSS comprenant des informations nécessaires pour déterminer une S-CSCF est transporté par un message Cx-Select-Pull Resp (204a).

16. Procédé selon la revendication 11, dans lequel, quand l'UE est en session,
si le HSS a mémorisé le nom de la S-CSCF ayant desservi ou desservant l'UE, le HSS renvoie, en fonction de la configuration du système, à l'I-CSCF un message de réponse comprenant le nom de la S-CSCF, et la I-CSCF transmet le message de requête de session de l'UE à la S-CSCF ; ou le HSS renvoie à la I-CSCF un message de réponse comprenant le nom de la S-CSCF et l'ensemble d'informations de capabilité de S-CSCF qui a la capabilité de satisfaire l'exigence la plus stricte d'abonnement au service de l'UE, et la I-CSCF détermine une S-CSCF ayant la capabilité de desservir l'usager et transmet le message de requête de session de l'UE à la S-CSCF déterminée ;
si aucune S-CSCF ayant desservi l'UE n'est mémorisée dans le HSS, le HSS renvoie directement à la I-CSCF un message de réponse comprenant l'ensemble d'informations de capabilité de S-CSCF qui a la capabilité de satisfaire l'exigence la plus stricte d'abonnement au service de l'UE avant que la I-CSCF détermine une S-CSCF ayant la capabilité de desservir l'UE et transmette le message de requête de session de l'UE à la S-CSCF déterminée (403a).

17. Procédé selon la revendication 11, dans lequel quand l'UE est en session,
le message reçu par le HSS depuis la I-CSCF pour solliciter les informations de la S-CSCF est transporté par un message Cx-Location-Query (402a), et ledit message de réponse de sollicitation renvoyé à la I-CSCF par le HSS comprenant les informations nécessaires pour déterminer une S-CSCF est transporté par un message Cx-Location-Query Resp (403a) ; ou
le message reçu par le HSS depuis la I-CSCF pour solliciter les informations de la S-CSCF est transporté par un message Cx -Select-Pull (402a), et ledit message de réponse de sollicitation renvoyé à la I-CSCF par le HSS comprenant des informations nécessaires pour déterminer une S-CSCF est transporté par un message Cx-Select-Pull Resp (403a).

18. Serveur d'Abonnés de Rattachement, HSS, configuré pour :
recevoir un message depuis une Fonction de Commande de Session d'Appel de Desserte, S-CSCF, le message comprenant une requête de mémorisation du nom de la S-CSCF et de téléchargement des informations d'abonnement de l'usager depuis le HSS vers la S-CSCF ; et
mémoriser le nom de la S-CSCF qui a envoyé le message et renvoyer à la S-CSCF un message de réponse comprenant les informations d'abonnement de l'usager, à la réception du message par la première unité.

19. Serveur d'Abonnés de Rattachement, HSS, configuré pour :
recevoir un message pour solliciter les informations d'une Fonction de Commande de Session d'Appel de Desserte, S-CSCF, depuis une Fonction de Commande de Session d'Appel d'Interrogation, I-CSCF ; et
renvoyer à la I-CSCF, si le HSS a mémorisé un nom d'une S-CSCF ayant desservi ou desservant un Equipement Utilisateur, UE, requérant l'enregistrement, un message de réponse de sollicitation comprenant le nom de la S-CSCF, ou comprenant le nom de la S-CSCF et l'ensemble d'informations de capabilité de S-CSCF qui a la capabilité de satisfaire l'exigence la plus stricte d'abonnement au service de l'UE requérant l'enregistrement ; ou, renvoyer à la I-CSCF, si aucune S-CSCF assignée ayant desservi ou desservant l'UE n'est mémorisée dans le HSS, d'un message de réponse de sollicitation comprenant un ensemble d'informations de capabilité de S-CSCF qui a la capabilité de satisfaire l'exigence la plus stricte d'abonnement au service de l'UE requérant l'enregistrement.
